# EUROPEAN PATENT APPLICATION

(11) **EP 4 671 675 A1**
(43) Date of publication of application: **31.12.2025**
(21) Application number: 24275076.8
(22) Date of filing: 27.06.2024
(51) Int. Cl.: G01B 5/008

(54) **HEAD UNIT**

(71) Applicant: Renishaw plc, Wotton-under-Edge, Gloucestershire GL12 8JR (GB)
(72) Inventor: The designation of the inventor has not yet been filed
(74) Representative: Rolfe, Edward William

(57) **Abstract**

A head unit via which a device can be mounted onto a positioning apparatus, the head unit comprising: a first mount provided at a first end of the head unit, for mounting a device thereon; a second mount provided at a second end of the head unit, for mounting the head unit on a positioning apparatus; a first set of electrical contacts for electrically connecting to a device mounted on the first mount, the signals from which are passed through to a first plug or socket electrical connector on the head unit, the first plug or socket electrical connector comprising a set of electrical contacts and a mechanical interface for fitting with a counterpart plug or socket electrical connector on the positioning apparatus; and a second set electrical contacts, different to and separate from the first set of electrical contacts, for electrically connecting to a device mounted on the first mount, the signals from which are passed through to a second plug or socket electrical connector on the head unit which is different to and separate from the first plug or socket electrical connector on the head unit, the second plug or socket electrical connector comprising a set of electrical contacts and a mechanical interface for fitting with a counterpart plug or socket electrical connector on the positioning apparatus.

## Description

The present invention relates to a head unit via which a device can be mounted onto a positioning apparatus, and associated apparatus, devices and interfaces therefor. For example, the present invention also relates to an electromechanical interface. The present invention also relates to a head unit, such as an articulated head unit, e.g. having such an electromechanical interface. The present invention also relates to a device, such a measurement probe, e.g. having an electromechanical apparatus, e.g. for mounting on a head unit. The present invention also relates to apparatus, such as a coordinate positioning apparatus, having such a head unit and/or measurement probe.

As is well known in the field of coordinate positioning apparatus, a measurement probe can be detachably mounted onto a probe interface (which could also be referred to herein as a "probe mount") on a coordinate positioning apparatus.

Typically, a coordinate positioning apparatus has a movement frame that facilitates relative motion of a measurement probe mounted thereon and an artefact to be inspected, in three orthogonal linear degrees of freedom. In the case of a traditional Cartesian CMM, this is typically achieved by way of three orthogonal linear movement axes, arranged in series, as is the case in a Bridge-type CMM, Cantilever CMM, Gantry CMM and Horizontal Arm CMM. However, other types of positioning apparatus exist, such as parallel-kinematic positioning apparatus, hexapod positioning apparatus, and articulated arm-type positioning apparatus. Typically the probe interface ("probe mount") is provided on the movable part of the coordinate positioning apparatus and the part of the positioning apparatus for supporting the workpiece is stationary, but this doesn't necessarily have to be the case and it could be the other way around, or both the probe interface and the workpiece support could be moveable.

It is known to provide the probe interface on a so-called head unit, which is (e.g. detachably) mounted on the coordinate positioning apparatus' movement frame and which is adapted to receive a measurement probe thereon, typically in a manner which facilitates automatic interchanging of the measurement probe mounted thereon, e.g. to/from a measurement probe rack located within the coordinate positioning apparatus' movement/operating volume.

In addition to providing relative motion in three orthogonal linear degrees of freedom, it is known for such a coordinate positioning apparatus to facilitate relative rotation of the measurement probe about at least one axis of rotation, for example about at least two orthogonal axes of rotation, for instance about three orthogonal axes of rotation. It is known for such axes of rotation to be provided by a so-called articulated head unit which is mounted on the coordinate positioning apparatus' movement frame, and which has a probe interface adapted to receive a measurement probe thereon. Examples of such articulated head units (which could be referred to as an articulated head) include the REVO-2, PHS-2, PH10 and PH20 articulated head units available from Renishaw plc.

Known probe interfaces have a set of position-constraining features for mechanically interacting with corresponding position-constraining features on a corresponding mounting face of the measurement probe so as to constrain the relative positional arrangement of the measurement probe and probe interface. Known probe interfaces also have a plurality of electrical contacts having probe-contacting ends for electrically connecting with corresponding electrical contacts on the corresponding mounting face of the measurement probe. Cabling/wiring (typically, at least part of which extends through within the head unit and through the structure of the coordinate positioning apparatus) connects the probe interface's electrical contacts to a power supply and/or controller (which can be a combined unit), such that a measurement probe can be powered thereby and/or such that the measurement probe can communicate with the controller thereby (which can comprise receiving signals from the controller, sending signals to the controller, or both sending and receiving signals to/from the controller).

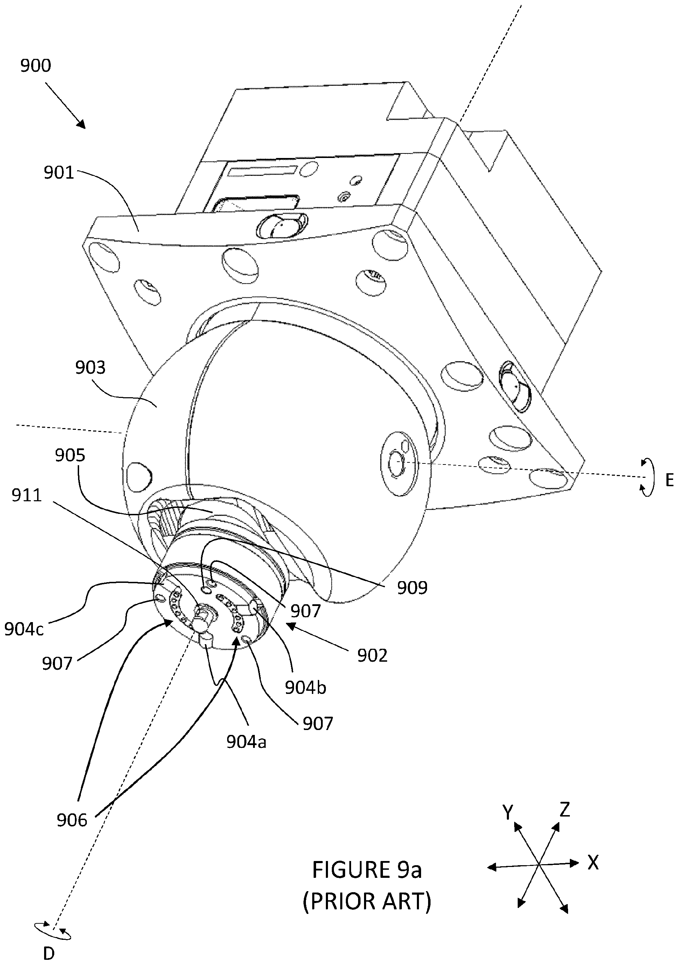

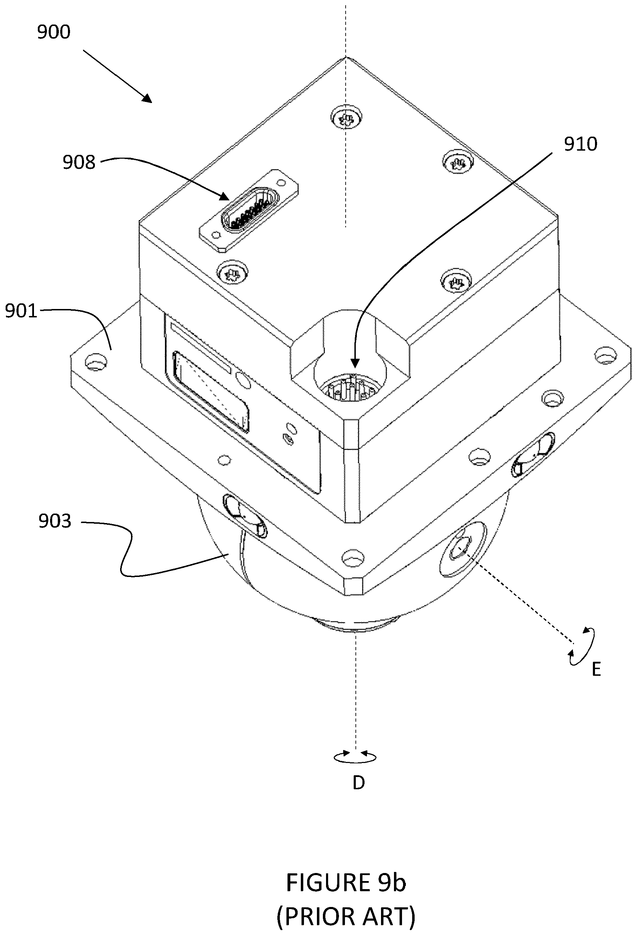

As illustrated in Figure 9a, a PH10 articulated head unit 900 available from Renishaw plc has two orthogonal axes of rotation D and E. In particular, the PH10 articulated head unit 900 has a first member 901 configured to be mounted to a quill of a coordinate positioning apparatus, a second member 903 rotatable relative to the first member about a first axis D, and a third member 905 rotatable relative to the second member about a second axis E. The PH10 articulated head unit 900 has an electromechanical probe interface 902 provided on the third member 905. The probe interface 902 has a set of position constraining features 904a, 904b, 904c (in particular, cylindrical rods) that form the first half of a kinematic mount for a measurement probe 1000 (not shown in Figure 9a) to be mounted thereon (which as explained below, itself has an electromechanical interface having a set of position constraining features that form the second half of said kinematic mount), and a set of electrical contacts 906 (in this case thirteen individual electrical contacts) for connecting to a measurement probe 1000. As illustrated in Figure 9b the first member 901 of the PH10 articulated head 900 has a D-Sub micro-D type "probe" connector 908 (having 15 electrical contacts) and a separate "head" connector 910.

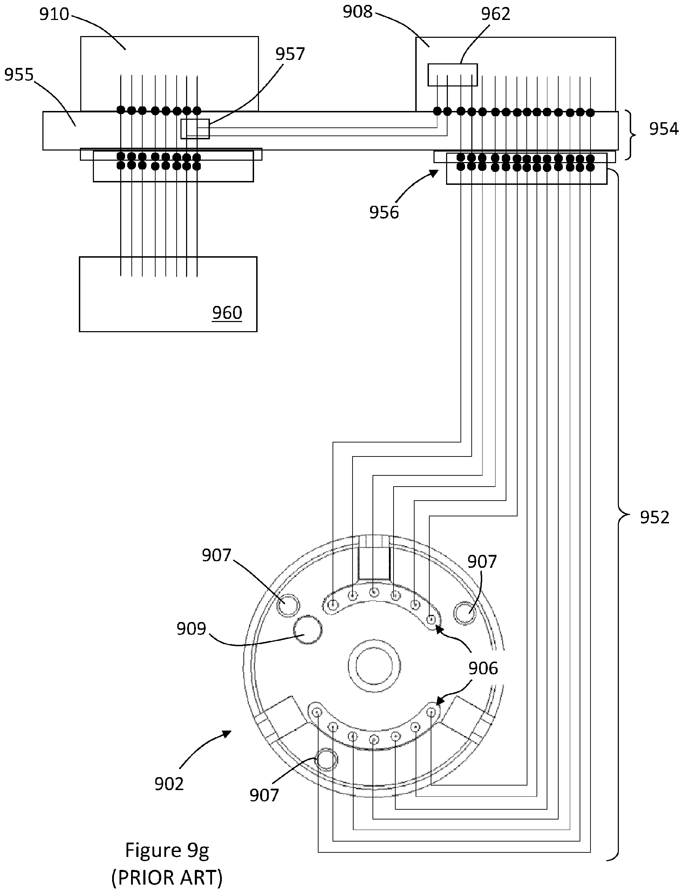

The PH10 articulated head unit 900 comprises a wiring set that terminates at a first end thereof at the set of electrical contacts 906 at the electromechanical probe interface 902, and terminates at a second end thereof at the electrical contacts of the micro-D type probe connector 908. As will be understood, the "wiring set" includes the electrical contacts at either end at which it terminates. As schematically illustrated in Figure 9g, the wiring set has thirteen individual (signal/power) electrical conductor path between the set of electrical contacts 906 and the electrical contacts of the micro-D type probe connector 908- i.e. one (signal/power) electrical conductor path for each of the thirteen electrical contacts of the set of electrical contacts 906, such that each of the thirteen electrical contacts 906 is connected to a corresponding electrical contact of the micro-D type probe connector 908 via its own individual electrical conductor path. Electrical signals/power can be relayed to/from a corresponding individual electrical contact of the micro-D type probe connector 908, to/from a corresponding individual electrical contact of the set of electrical contacts 906 at the probe interface (and hence, to/from a measurement probe 1000 mounted thereon). The electrical conductor path of the wiring set comprises flexible wires 952, wires/lines 954 provided on a PCB 955 within the articulated head unit 900, and connectors 956 therebetween.

A cable (e.g. of the positioning apparatus on which the PH10 head unit 900 is mounted) can be connected to the micro-D type probe connector 908 such that a measurement probe 1000 mounted on the probe interface 902 can be powered thereby, and such that measurement probe signals can be relayed back to a controller thereby.

As also schematically illustrated in Figure 9g, the head connector 910 is connected to one or more components 960 inside the articulated head unit 900. Such components 960 include those components, such as motors, which facilitate unlocking/locking and reorientation of the second 903 and third 905 members about their respective axes, D, E. Other components in the PH10 articulated head unit 900 to which the head connector 910 is connected include potentiometers (for reporting the relative orientations of the first, second and third members about their respective axes, D, E), a lock-status indication circuit (for reporting whether the first, second and third members are properly locked at an indexed position) and an light emitted diode (LED) indicator (for indicating probe status, i.e. is the probe properly seated). Accordingly, such components 960 can be connected to a controller via a cable running between the controller and the head connector 910 so that the PH10 articulated head unit 900 can be powered thereby and controlled/operated by a controller thereby (e.g. its axes can be operated so as to change orientation).

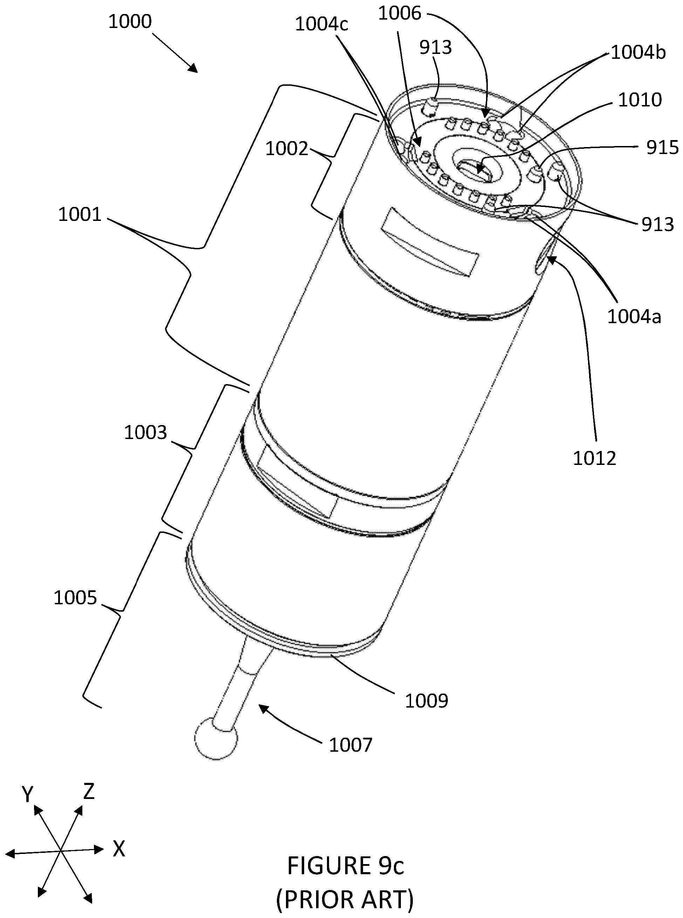

Figure 9c illustrates an example measurement probe 1000 (in particular, the SP25M analogue scanning probe available from Renishaw plc), for mounting on the PH10 articulated head unit 900. The SP25M measurement probe is a known modular probe system comprising a probe body 1001 having an electromechanical interface 1002, a probe module 1003 and a stylus module 1005. The modular probe system is, for instance, described in US Patent No. 6772527. In summary, the stylus module 1005 comprises a stylus 1007 for contacting a workpiece to be inspected, and a stylus holder 1009 to which the stylus is secured (e.g. via a screw thread). The stylus holder 1009 comprises a mount for detachable mounting onto the probe module 1003. In particular, the stylus holder 1009 and probe module 1004 comprise respective kinematic mount features and magnetic retaining means for magnetically retaining the stylus holder 1009 on the probe module 1003 in a repeatable, detachable manner. As explained in more detail in US6772527, the probe module 1003 is configured such that the part on which the stylus module 1005 is mounted can pivot/tilt about two orthogonal axes. A mirror is provided on the tiltable part of the probe module 1004. The probe module 1003 comprises a mount for detachable mounting onto the probe body 1001. In particular the probe module 1003 and probe body 1001 comprise respective kinematic mount features and magnetic retaining means for magnetically retaining the probe module 1003 on the probe body 1001 in a repeatable, detachable manner. The probe body 1001 has an optical sensor arrangement comprising a light emitter and a sensor. Light from the light emitter travels through respective windows in the probe body 1001 and probe module 1003 to reach the mirror in the probe module 1003. Deflection of the stylus module 1005 (e.g. due to contact with a workpiece) causes tilting of the tiltable part of the probe module 1003, and thereby causes tilting of the mirror, which in turn is sensed by the light sensor within the probe body 1001 and turned into a signal by electronics.

Different stylus modules 1005 (e.g. having different length and/or shaped styli) can be mounted on the probe module 1003. Also, different probe modules 1003 (e.g. which may have different spring rates on their tilting mechanism) are available that can be mounted on the probe body 1001, such than an appropriate probe module 1003 can be chosen and used for a particular stylus module 1005.

As shown in Figure 9c, the probe body 1001 part of the measurement probe 1000 has an electromechanical interface 1002, which is manufactured as a separate component to the rest of the probe body 1001 and affixed thereto. The electromechanical interface 1002 comprises a set of mechanical/position constraining features 1004a, 1004b, 1004c (in particular, pairs of spherical balls) that are configured to mate with the mechanical/position constraining features 904a, 904b, 904c on the PH10 articulated head unit's 900 probe interface 902. Together, the PH10 articulated head unit's set of position constraining features 904a, 904b, 904c and the measurement probe's set of position constraining features 1004a, 1004b, 1004c define a highly repeatable, non-over-constrained, kinematic mount. The electromechanical interface 1002 of the measurement probe 1000 also comprises a set of electrical contacts 1006 (in this case thirteen individual electrical contacts) which are configured to electrically connect to the set of electrical contacts 906 on the articulated head unit's 900 probe interface 902, when the measurement probe's and head unit's corresponding position constraining features are engaged. The electrical contacts 1006 on the measurement probe 1000, and the electrical contacts 906 on the electromechanical probe interface 902 enable the powering of the measurement probe 1000 (e.g. probe body 1001) as well as communication therewith (e.g. the sending of position signals from the measurement probe 1000/probe body 1001, to a controller).

Although not depicted, the set of electrical contacts 906 on the probe interface 902 are rigidly mounted therein via an electrically non-conductive plastic insert (which is held rigidly within the metallic body of the probe interface 902), whereas the set of electrical contacts 1006 of the measurement probe 1000's electromechanical interface 1002 are axially spring loaded within an electrically non-conductive plastic insert (which is held rigidly within the metallic body of the probe body 1001). Accordingly, when the measurement probe 1000/probe body 1001 is mounted on the articulated head's electromechanical probe interface 902 via the corresponding sets of position constraining features 904, 1004, the electrical contacts 906 on the probe interface 902 engage with and displace the electrical contacts 1006 of the measurement probe 1000/probe body 1001 against their spring means, such that the electrical contacts 1006 of the measurement probe 1000/probe body 1001 are actively biased/urged into the probe interface's electrical contacts 906.

The measurement probe 1000/probe body 1001 is held on the head unit 900 via a mechanical cam mechanism. In particular, when the measurement probe's and head unit's corresponding position constraining features are engaged, a protruding peg 911 on the head unit's probe interface 902 is received within a socket 1010 on the measurement probe 1000/probe body 1001. The peg 911 is shaped such that a rotatable cam member (not visible in Figure 9c) within the socket 1010 can be rotated so as to engage and pull on the protruding peg 911 (which in turn causes the measurement probe 1000 and head unit 900 to be pulled together), by turning a rotatable cylinder 1012 accessible on the side of the measurement probe 1000/probe body 1001. The rotatable cylinder 1012 is held axially in place via a pin 915. As shown, the pin 915 is protruding and therefore an oversized hole 909 is provided in a corresponding location on the probe interface 902 such that it does not interfere with the coupling between the probe interface 902 and the measurement probe 1000 mounted thereon.

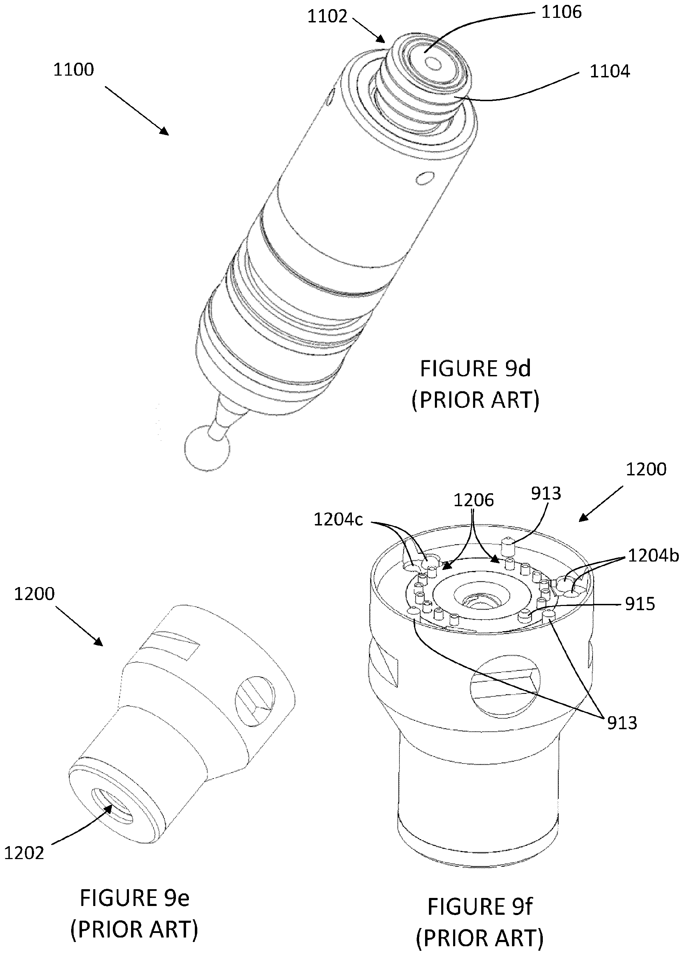

The electromechanical probe interface 902 and the electromechanical interface of the measurement probe 1000/probe body 1001 comprise corresponding orientation features configured such that the measurement probe 1000 can be mounted on the probe interface in one rotational orientation only. In particular, the probe interface 902 comprises three holes 907 and the measurement probe 1000/probe body 1001 comprises three correspondingly arranged pins 913 such that the pins can be received in the holes 907. The holes 907 and pins 913 are not symmetrically arranged, and as such are arranged and configured such that the measurement probe's and probe interface's corresponding position constraining features (1004, 904) can only be engaged when they are arranged such that the holes 907 and pins 913 are all aligned, which can only be true at one particular rotational orientation. The PH10 head unit 900 is configured such that by way of adaptors that are available for PH10, signals from a probe which has only two electrical output connections, such as a so-called touch-trigger probe (such as the TP20 touch-trigger probe available from Renishaw plc) mounted on the probe interface can be relayed back to a controller via the head connector 910. Such a probe having only two electrical output connections is also colloquially known as a "two-wire probe". Figure 9d shows an example of a two-wire probe 1100 which comprises an M8 thread connector 1102 for screw-fastening onto a head unit, and also comprises two electrical connectors provided by the M8 thread connector; one of which is provided by the helical thread 1104 itself and the other of which is provided by an electrical contact 1106 nestled within the M8 thread connector. However, the PH10 head unit's probe interface 902 does not have a corresponding mechanical or electrical thread connector. Accordingly, an adaptor module 1200 shown in Figures 9e and 9f is available from Renishaw plc which is configured to sit between the PH10's probe interface and the TP20 touch-trigger probe. The adaptor module 1200 has a threaded socket 1202 at one end for mechanically and electrically connecting with the M8 thread connector 1102 and the electrical contacts 1104, 1106 of the TP20 probe 1100, and at its other end has a set of position constraining features (of which only two pairs 1204a, 1204c of the corresponding spherical balls can be seen in Figure 9f) and a set of electrical contacts 1206 for engaging with the corresponding set of position containing features 904 and set of electrical contacts 906 on the PH10 head unit 900, as well as the same cam mechanism described above in connection with the measurement probe 1000 depicted in Figure 9c. Wiring inside the adaptor module 1200 is configured such that when the TP20 touch-trigger probe 1100 is mounted on the PH10 head unit 900 via the adaptor module 1200, the TP20 touch-trigger probe's two electrical connectors are electrically connected to a subset of the probe interface's thirteen individual electrical contacts, and thereby connected to two of the electrical pins of the micro-D type probe connector 908. This adaptor module 1200 has thirteen individual electrical contacts despite only two being needed/used, for reasons of ease of mass manufacture. A second adaptor is in the form of an electrical jumper 962 (see Figure 9g) which is placed on four of the electrical pins of the micro-D type connector 908. In particular, this jumper connects the two pins on the micro-D type connector 908 to which the output from the TP20 is relayed, to two pins on the micro-D type connector which are wired within the PH10 head unit to two pins on the head connector 910 via a switch 957 (which switches between connecting to i) the two pins on the micro-D type connector; and ii) other wiring/electronics within the PH10 head unit). That way, for those customers wanting to use only two-wire probes with the PH10 head unit, they can use just a single cable through the positioning apparatus which connects to the PH10 head unit.

The present invention is concerned with an improved head unit for mounting a device onto a positioning apparatus. As also described herein, the present invention also concerns an improved electromechanical interface, and/or an improved device such as a measurement probe, and/or an improved apparatus, details of which are described later on in this document.

According to a first aspect of the invention there is provided a head unit via which a device (such as an inspection device, for instance a measurement probe) can be mounted onto a positioning apparatus, the head unit comprising: a first mount provided at a first end of the head unit, for mounting a device thereon; a second mount provided at a second end of the head unit, for mounting the head unit on a positioning apparatus; a first set of electrical contacts for electrically connecting to a device mounted on the first mount, the signals from which are passed through to a first plug or socket electrical connector on the head unit, the first plug or socket electrical connector comprising a set of electrical contacts and a mechanical interface for fitting with a counterpart plug or socket electrical connector on the positioning apparatus; a second set electrical contacts, different to and separate from the first set of electrical contacts, for electrically connecting to a device mounted on the first mount, the signals from which are passed through to a second plug or socket electrical connector on the head unit which is different to and separate from the first plug or socket electrical connector on the head unit, the second plug or socket electrical connector comprising a set of electrical contacts and a mechanical interface for fitting with a counterpart plug or socket electrical connector on the positioning apparatus.

Providing two different and separate sets of electrical contacts and associated plug/socket electrical connectors is a particularly beneficial arrangement which, for example, can facilitate backward compatibility for end users having existing/legacy devices, whilst also enabling the use of newer (e.g. communication) technology/newer devices. Accordingly, the first aspect of the invention can, for instance, enable the adoption of newer technology whilst avoiding unnecessary wastage/disposal of existing/legacy devices. Providing two different and separate sets of electrical contacts and associated plug/socket electrical connectors can also be beneficial in terms of providing the user with the flexibility of having multiple connection options.

The device could be an inspection device. The device could be a contact device (e.g. a contact probe) or a non-contact device (e.g. a non-contact probe). The inspection device could be configured for measuring/determining the position of one or more points on the artefact. Examples of suitable contact probes include so-called touch-trigger probes, scanning or analogue probes, and surface finish probes. Examples of suitable non-contact probes include camera probes, structured light projection probes, and line stripe probes. Other examples of suitable inspection devices include temperature probes and ultrasound probes.

The first and second sets of electrical contacts for electrically connecting to a device mounted on the first mounting face can be provided at or proximal the first end of the head unit.

The first and second plug or socket electrical connectors can be provided at or proximal the second end of the head unit.

The first mount can comprise a plurality of mounting features configured to engage with counterpart mounting features on a device. The plurality of mounting features and the first and second sets of electrical contacts can be provided on a common face at the first end of the head unit.

Indeed, the first mount could comprise an electromechanical interface in accordance with the second aspect of the invention (described in more detail below) (wherein the "mounting features" of the first aspect of the invention are analogous to the "mechanical/position-constraining features" mentioned in connection with the second aspect of the invention, and wherein the first and second sets of electrical contacts of the first aspect of the invention are analogous to the first and second sets of electrical contacts of the second aspect of the invention). Accordingly, features described above in connection with the second (and other) aspects of the invention are also applicable to the first aspect of the invention (either in isolation or in combination) and are not repeated here in their entirety for reasons of brevity.

Indeed, for example, the first mount and the first and second sets of electrical contacts of the head unit can be configured to engage with a counterpart mount and electrical contacts on a device by bringing the head unit and device together along a "first" or "predetermined" engagement direction. The device-contacting ends of the first set of electrical contacts can lie at a first position along the "first" or "predetermined" engagement direction and the device-contacting ends of the second set of electrical contacts can lie at a second, different, position along the "first" or "predetermined" engagement direction.

The first set of electrical contacts can comprise at least three electrical contacts, for example at least five electrical contacts, for instance at least ten electrical contacts, in particular (for example) thirteen electrical contacts.

The second set of electrical contacts can comprise at least three electrical contacts, for example at least five electrical contacts, for instance eight electrical contacts.

The electrical contacts of the first set of electrical contacts can be arranged in a circular configuration having a first radius. In other words, the electrical contacts of the first set of electrical contacts can lie on a first notional circular line having a first radius.

The electrical contacts of the second set of electrical contacts can be arranged in a circular configuration having a second radius. In other words, the electrical contacts of the second set of electrical contacts can lie on a second notional circular line having a second radius. The first radius can be different to the second radius.

The first set of electrical contacts and the second set of electrical contacts can be arranged concentrically with respect to each other. In other words, the first set of electrical contacts and the second set of electrical contacts can be arranged such that the first and second notional circular lines are concentric. This has been found to be a particularly beneficial configuration, especially with regard to providing a compact interface.

The head unit can comprise a head unit in accordance with the fourth aspect of the invention, the features of which are described below and not repeated here in their entirety for the sake of brevity.

For instance, the head unit can comprise a first wiring set which terminates at a first end thereof at the first set of electrical contacts, and which terminates at a second end thereof at the first plug or socket electrical connector. The head unit can comprise a second wiring set, which is (electrically) independent of the first wiring set, and which terminates at a first end thereof at the second set electrical contacts, and which terminates at a second end thereof at the second plug or socket electrical connector. The wiring sets can be independent in that the first and second wiring sets do not share any electrical conductors for relaying signals/power between their end contacts/connectors.

The first plug or socket electrical connector can comprise a D-sub (also known as a D-subminiature) type of electrical connector, for instance a D-sub socket, e.g. a D-sub socket according to IEC 60807-3:1990 1990-07-18 (IEC = International Electrotechnical Commission).

The second plug or socket electrical connector can comprise a RJ45 connector, for instance a RJ45 socket, e.g. a RJ45 socket according to ANSI/TIA-1096-A, March 2008. As is well known, RJ45 connectors are commonly used to terminate twisted pair Ethernet cables, such as a Category 5 cable, e.g. a Category 5 cable according to ANSI/TIA-568-E, Mar 2020 (ANSI = American National Standards Institute, TIA = Telecommunications Industry Association). Accordingly, the second plug or socket electrical connector can be configured to connect with a Category 5 cable having a corresponding RJ45 connector. As will be understood there are later Category "#" cables that are backward compatible with the Category 5 standard (such as the Category 6 cable, Category 7 cable, and the Category 8 cable as all defined ANSI/TIA-568-E, Mar 2020), and therefore references herein to Category 5 cables include references to such later backward compatible Category # cables.

The second wiring set can be configured to be compatible with the Ethernet standard as defined in IEEE 802.3-2022 29 July 2022 so as to provide speeds of operation of at least 1 Gigabit per second (i.e. 1000BASE-T1), preferably speeds of operation of at least 2.5 Gigabits per second (i.e. 2.5GBASE-T), more preferably speeds of operation of at least 5 Gigabits per second (i.e. 5GBASE-T), especially preferably speeds of operation of at least 10 Gigabits per second (i.e. 10GBASE-T). (IEEE = Institute of Electrical and Electronic Engineers). In other words, the second wiring set can be configured such that an end-user can electrically connect a controller, computer, processor or the like to a device mounted on the first mount (that is electrically connected to the second set of electrical contacts) and communicate with it at a speed of operation of at least a gigabit per second, e.g. via a suitable cable (such as a Cat 5 cable or better, e.g. could use a Cat 5e, Cat 6, Cat 7 or Cat 8 cable) which is connected to the second (plug or socket) electrical connector on the head unit.

Each wiring set can comprise a plurality of individual conductor paths; in particular such that each electrical contact of the first and second set of electrical contacts (for electrically connecting to a device mounted on the first mount) has its own individual conductor path between it and a corresponding electrical connector of the plug or socket electrical connector on the head unit. Accordingly, for example, the second wiring set can comprise eight individual conductor paths, such that each electrical contacts of the second set of electrical contacts has its own individual conductor path between it and a corresponding electrical contact of the second plug or socket electrical connector.

Each individual conductor path could be used as a transmission line by itself. Optionally, pairs of conductor paths could be used as a single transmission for a differential electrical signal. For example, the eight individual conductor paths of the second wiring set could be used as four pairs, wherein each pair is used as a transmission line for a differential electrical signal. Accordingly, the eight individual conductor paths of the second wiring set can be configured to provide four transmission lines for differential electrical signals; and so could be referred to as "four transmission line pairs", or "four differential pairs".

As will be understood, a wiring set (and hence the transmission lines), includes the electrical connectors at either end. Accordingly, the first wiring set includes the first set of electrical contacts for electrically connecting to a device mounted on the first mount, and the electrical contacts of the first plug or socket electrical connector. Similarly, the second wiring set includes the second set of electrical contacts for electrically connecting to a device mounted on the first mount, and the electrical contacts of the second plug or socket electrical connector.

As will be understood, an individual conductor path could comprise a single continuous conductor (e.g. wire) that extends between an electrical contact (of the first or second set of electrical contacts) for electrically connecting to a device mounted on the first mount, and a corresponding electrical contact of the (first or second) plug or socket electrical connector. However, this doesn't have to be the case, and it can be beneficial for an individual conductor path to comprise a plurality of concatenated conductors (e.g. so as to facilitate interchangeable parts of the head unit).

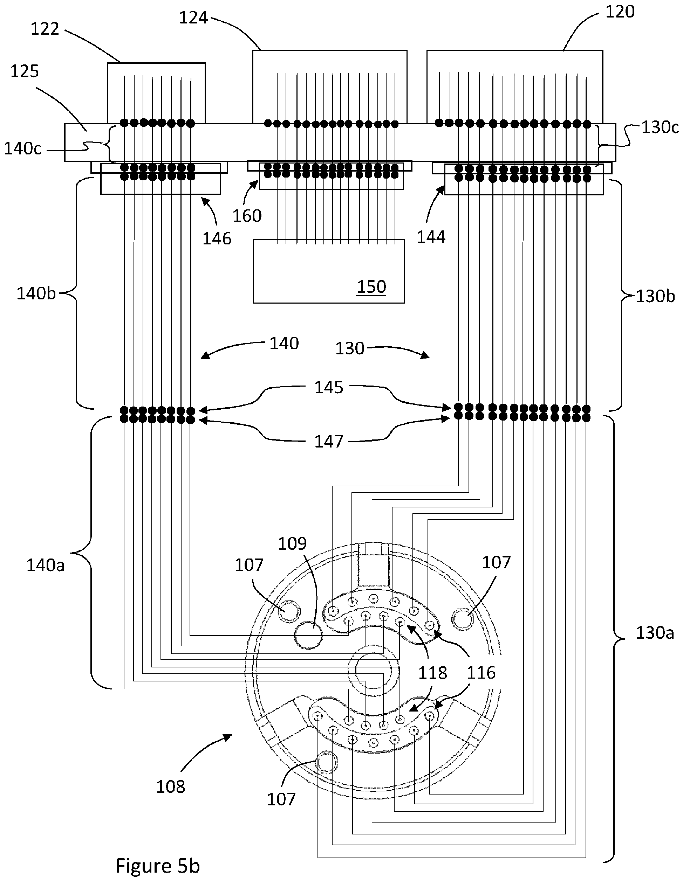

It can be preferred that the second wiring set is configured such that there is a nominal characteristic impedance maintained along the entire length of the second wiring set (e.g. along the (four) transmission line pairs). The nominal characteristic impedance can be not less than 80 Ohms and not more than 120 Ohms, more preferably not less than 90 Ohms and not more than 110 Ohms, especially preferably substantially 100 Ohms. The characteristic impedance is "nominal" in that it is accepted that the actual characteristic impedance might vary by a certain amount, e.g. by +/- 10% of the nominal characteristic impedance. Indeed, for example, whilst it can be preferred the characteristic impedance is substantially constant along the entire length of second wiring set, this can be difficult to achieve in practice, especially if the head unit comprises moving parts (e.g. first and second relatively rotatable parts) the relative movement (e.g. rotation) of which affects the actual characteristic impedance, e.g. due to one or more of the wiring sets moving/changing therewith). Accordingly, there can be impedance mismatches along the length of the second wiring set, especially if the second wiring set comprises multiple concatenated sections (e.g. multiple concatenated cables and/or traces on a PCB). Indeed, it can be acceptable that each section/cable/trace of the second wiring set is configured to be within +/- 10% of the nominal characteristic impedance. For example, if the desired nominal characteristic impedance is 100 Ohms, then the actual characteristic impedance of each section of a wiring set along its length can be 100 Ohms +/-10%. Accordingly, in such a case, and referring to the embodiment described below in connection with Figure 5b, the characteristic impedance of a first section of a wiring set (e.g. cable 140a) could be 90 Ohms and the characteristic impedance of a second section of a wiring set (e.g. cable 140b) could be 110 Ohms. Similarly, if the desired nominal characteristic impedance is 90 Ohms, then the actual characteristic impedance of each section of a wiring set along its length can be 90 Ohms +/-10%.

The impedance characteristics of the first wiring set can be different to the impedance characteristics of the second wiring set. Indeed, the first wiring set might not be configured with any predetermined nominal impedance characteristic, and there could be significant impedance mismatches along its length/between different sections of the wiring set (e.g. of greater than +/-25%).

The head unit can comprise a first articulated joint configured such that the angular orientation of the first mount relative to the second mount can be adjusted about a first axis. The head unit can comprise a second articulated joint such that the angular orientation of the first mount relative to the second mount can be adjusted about a second axis that is orthogonal to the first axis.

The first wiring set can comprise one or more Flat Flexible Cables (FFC) and the second wiring set can comprise one or more Flat Flexible Cables (FFC). The first wiring set can comprise two or more concatenated Flat Flexible Cables (FFC). The second wiring set can comprise two or more concatenated Flat Flexible Cables (FFC). At least one of the Flat Flexible Cables (FFC) of the first wiring set and at least one of the Flat Flexible Cables (FFC) of the second wiring set can overlay each other within the head unit. The conductors within the first and second FFCs can be configured such that as assembled within the head unit, the signal carrying conductors of the second wiring set's FFC are laterally offset/staggered with respect to the conductors of the first wiring set's FFC so as to reduce electrical interference therebetween, and thereby help control the characteristic impedance of the second wiring set. For example, the conductors within the first and second FFCs could be configured such that as assembled within the head unit none of the conductors of the above-described differential pairs of the second wiring set directly overlie any conductors of the first wiring set's FFC.

Features described in connection with the other aspects of the invention described herein (see below) are also applicable to this first aspect of the invention (either in isolation or in combination) and vice versa.

This document is also concerned with an improved electromechanical interface for an interchangeable measurement probe system.

According to second aspect of the invention there is provided an electromechanical interface for: a) a device, via which the device can be mounted onto a head unit of a coordinate positioning apparatus; or b) a head unit of a coordinate positioning apparatus, via which a device can be mounted thereon, the electromechanical interface comprising: one or more mechanical features for interacting with one or more counterpart mechanical features on a counterpart electromechanical interface for physically constraining the relative position of the electromechanical interfaces (accordingly, the one or more mechanical features could be referred to as one or more "position-constraining features"); a first set of electrical contacts for electrically connecting with a first set of electrical contacts on a counterpart electromechanical interface; and a second set of electrical contacts, different to and separate from the first set of electrical contacts, for electrically connecting with a second set of electrical contacts on a counterpart electromechanical interface.

Providing the electromechanical interface with two sets of electrical contacts provides an effective solution for enabling interoperability between different electromechanical interfaces having differently configured electrical contacts. This can be beneficial, for instance, for reasons of backward compatibility with existing or legacy devices for mounting on the electromechanical interface, such as existing or legacy measurement probes or head units, whilst also providing for an alternative (in particular, new) type of electrical connection between the electromechanical interface and a head unit or device (such as a measurement probe), which can make use of one or more electrical contacts from one of, or both of, the first and second sets of electrical contacts.

Preferably, the second set of electrical contacts of the electromechanical interface are set back relative/compared to the first set of electrical contacts. Providing the electromechanical interface with two sets of electrical contacts, one of which is set back compared to the other provides an effective solution for enabling interoperability between different electromechanical interfaces having differently configured electrical contacts. For instance, such an arrangement can help to avoid electrical shorting of, and/or provide for improved mechanical fitting of a device having a counterpart electromechanical interface mounted thereon, and/or can also help to avoid contact wear and/or contamination of the electrical contacts.

As will be understood, and in line with its normal meaning when describing the relative position of two things, "set back" means that the first set of electrical contacts are further forward than the second set of electrical contacts. Other ways of describing the "set back" relative arrangement of the first and second electrical contacts include that the second set of electrical contacts are in a "retreated", "recessed", or "stepped back" position relative/compared to the first set of electrical contacts.

As will be understood, the "set back" (or "retreated", "recessed", or "stepped back") arrangement of the second set of electrical contacts relative to the first set of electrical contacts can be defined with respect to a "first" or "predetermined" direction. As will be understood, the first and second sets of electrical contacts can each have a plurality of electrical contacts which are (laterally) distributed/spread apart (e.g. across an area extending in two-dimensions), and the "first" or "predetermined" direction can be perpendicular to the distribution/spread (e.g. perpendicular to said two-dimensional area).

As will be understood, the first and second sets of electrical contacts can each have a plurality of electrical contacts which are "laterally" distributed/spread apart (in other words, the first set of electrical contacts can have a plurality of electrical contacts which are "laterally" distributed/spread apart, and the second set of electrical contacts can have a plurality of electrical contacts which are "laterally" distributed/spread apart). It could be described that the second set of electrical contacts are "longitudinally" set back (retreated/recessed/stepped back) relative to the first set of electrical contacts. In other words, it could be described that the second set of electrical contacts are "axially" set back (retreated/recessed/stepped back) relative to the first set of electrical contacts (e.g. where the second set of electrical contacts are set back relative to the first set of electrical contacts along an axial direction which is perpendicular to the lateral distribution/spread of the electrical contacts within a set). Accordingly, the above-mentioned predetermined direction (along which the second set of electrical contacts are "set back" relative to the first set of electrical contacts) can be said to be the above-mentioned longitudinal direction (or the above-mentioned axial direction).

The electromechanical interface (and in particular, for example, the one or more mechanical features and the first and/or second sets of electrical contacts of the electromechanical interface) can be configured to engage with a counterpart electromechanical interface (e.g. counterpart mechanical features and electrical contacts on a counterpart electromechanical interface) by bringing the two electromechanical interfaces together along a predetermined engagement direction. Accordingly, the above-mentioned "first" or "predetermined" direction (along which the second set of electrical contacts are "set back" relative to the first set of electrical contacts) can be the predetermined engagement direction.

As will be understood, the plurality of electrical contacts in the first set of electrical contacts can be arranged to have substantially the same position as each other along the above-mentioned predetermined direction (along which the second set of electrical contacts are "set back" relative to the first set of electrical contacts). Similarly, the second set of electrical contacts can be arranged to have substantially the same position as each other along the above-mentioned predetermined direction (along which the second set of electrical contacts are "set back" relative to the first set of electrical contacts). For example, with reference to the above mentioned "longitudinal" (and "axial") direction, the plurality of electrical contacts in the first set of electrical contacts can be arranged to have substantially the same longitudinal position/arrangement as each other (or substantially the same axial position). Similarly, the plurality of electrical contacts in the second set of electrical contacts can be arranged to have substantially the same position as each other along the above-mentioned predetermined direction (along which the second set of electrical contacts are "set back" relative to the second set of electrical contacts). For example, with reference to the above mentioned "longitudinal" (and "axial") direction, the plurality of electrical contacts in the second set of electrical contacts can be arranged to have substantially the same longitudinal position/arrangement as each other (or substantially the same axial position).

The first set of electrical contacts can comprise at least three electrical contacts, for example at least five electrical contacts, for instance at least ten electrical contacts, in particular (for example) thirteen electrical contacts.

The electrical contacts of the first set of electrical contacts can be arranged so as to be distributed/spread around (e.g. and centred on) an axis (hereinafter referred to as a first electrical contact distribution axis). Accordingly, the above-mentioned predetermined direction (along which the second set of electrical contacts are "set back" relative to the first set of electrical contacts) can be the first electrical contact distribution axis.

For example, the electrical contacts of the first set of electrical contacts can lie on, e.g. be distributed/spread along, a first notional circular line (which extends around the first electrical contact distribution axis) having a first radius. In other words, the electrical contacts of the first set of electrical contacts can be arranged so as to be distributed/spread around the first electrical contact distribution axis, such that they are arranged in a circular array having a first radius.

The electrical contacts of the first set of electrical contacts could be spaced apart (laterally/around the first electrical contact distribution axis) such that they are arranged into at least two distinct groups of electrical contacts, e.g. at least two distinct groups along the first notional circular line. Such grouping can be beneficial for facilitating the mechanical arrangement/location/provision of other parts of the electromechanical interface, such as the bias means/member/device. In particular, the first set of electrical contacts can comprise a first group of a plurality of electrical contacts (e.g. six electrical contacts) which are substantially equiangularly spaced relative to each other along the first notional circular line, and a second group of a plurality of electrical contacts (e.g. seven electrical contacts) which are substantially equiangularly spaced relative to each other along the first notional circular line. The first and second groups of electrical contacts can be separated from each other (along the first notional circular line) such that the angle between the neighbouring end contacts of each group is substantially larger than (e.g. is at least double) the angle between adjacent contacts within each group.

The second set of electrical contacts can comprise at least three electrical contacts, for example at least five electrical contacts, for instance eight electrical contacts.

The electrical contacts of the second set of electrical contacts can be arranged so as to be distributed/spread around (e.g. and centred on) an axis (herein after referred to as a second electrical contact distribution axis). Preferably, the second electrical contact distribution axis is substantially parallel to the above mentioned first electrical contact distribution axis. Accordingly, the above-mentioned predetermined direction (along which the second set of electrical contacts are "set back" relative to the first set of electrical contacts) can be the first electrical contact distribution axis and/or the second electrical contact distribution axis.

For example, the electrical contacts of the second set of electrical contacts can lie on, e.g. be distributed/spread along, a second notional circular line (which extends around the second electrical contact distribution axis) having a second radius. In other words, the electrical contacts of the second set of electrical contacts can be arranged so as to be distributed/spread around the second electrical contact distribution axis, such that they are arranged in a circular array having a second radius. The electrical contacts of the second set of electrical contacts could be spaced apart (laterally/around the second electrical contact distribution axis) such that they are arranged into at least two distinct groups of electrical contacts, e.g. at least two distinct groups along the second notional circular line. Such grouping can be beneficial for facilitating the mechanical arrangement/location/provision of other parts of the electromechanical interface, such as the bias means/member/device. The second set of electrical contacts can comprise a first group of a plurality of electrical contacts (e.g. four electrical contacts) which are substantially equiangularly spaced relative to each other along the second notional circular line, and a second group of a plurality of electrical contacts (e.g. four electrical contacts) which are substantially equiangularly spaced relative to each other along the second notional circular line. The first and second groups of electrical contacts can be separated from each other (along the second notional circular line) such that the angle between the neighbouring end contacts of each group is substantially larger than (e.g. is at least double) the angle between adjacent contacts within each group.

It can be beneficial that the first radius can be different to the second radius. The first radius can be greater than the second radius, or vice versa.

The first set of electrical contacts and the second set of electrical contacts can be arranged concentrically with respect to each other. In other words, the first set of electrical contacts and the second set of electrical contacts can be arranged such that the first and second notional circular lines are concentric. Accordingly, the above mentioned first and second electrical contact distribution axes can be coaxial (in other words, the notional first and second circular lines can both extend around the same electrical contact distribution axis). This has been found to be a particularly beneficial configuration, especially with regard to providing a compact interface. The second radius can be smaller than the first radius such that the second set of electrical contacts are arranged concentrically with respect to, and surrounded by, the first set of electrical contacts (or vice versa). It can be preferred that the set of electrical contacts having the smaller number of electrical contacts (which in many of the embodiments herein, is the second set of electrical contacts) has the smaller radius.

As will be understood, when it is said that the one or more mechanical features "physically constrain" the relative position of the electromechanical interfaces, this means that it is those features which (predominantly, if not substantially solely) define the relative seated position of the two electromechanical interfaces (i.e. relative to each other). Accordingly, for ease of reference in this document, they are sometimes referred to collectively as the "position-constraining features". Preferably, the one or more mechanical features of the electromechanical interface and the counterpart mechanical features of the counterpart electromechanical interface are configured such that the relative seated position of the two electromechanical interfaces define a repeatable seated position.

Whilst other parts of the two electromechanical interfaces may touch (such as the electrical contacts, and the below described bias means/member/device), those other parts have a negligible effect on the relative seated position of the two electromechanical interfaces.

Preferably the one or more mechanical features for interacting with one or more counterpart features on a counterpart electromechanical interface are configured to physically constrain the relative position of the two electromechanical interfaces (i.e. the electromechanical interface and the counterpart electromechanical interface) in all six degrees of freedom (three orthogonal linear degrees of freedom, and three orthogonal rotational degrees of freedom). Accordingly, the one or more mechanical features of the electromechanical interface and the counterpart mechanical features of the counterpart electromechanical interface are configured such that they provide a repeatable relative seated position of the two electromechanical interfaces in all six degrees of freedom.

The one or more mechanical features (for interacting with one or more counterpart features on a counterpart electromechanical interface are configured to physically constrain the relative position of the electromechanical interfaces) can comprise three or more mechanical features (for interacting with one or more counterpart features on a counterpart electromechanical interface for physically constraining the relative position of the electromechanical interfaces).

The three or more mechanical features can be arranged so as to be distributed/spread around (e.g. and centred on) an axis (hereinafter referred to as a mechanical feature distribution axis). The three or more mechanical features can be arranged so as to lie on a third notional circular line (which extends around the mechanical feature distribution axis) having a third radius. The third radius can be greater than the first and second radii. The three or more mechanical features can be arranged concentrically with respect to the first and second sets of electrical contacts (i.e. such that the first, second and third notional circular lines are all concentric). In other words, the first and second electrical contact distribution axes, and the mechanical feature distribution axis could all be coaxial (in other words, the notional first, second and third circular lines can all extend around the same distribution axis). In other words, the first and second electrical contact distribution axes, and the mechanical feature distribution axis could be the same axis).

The (e.g. three or more) mechanical features can each present a cylindrical surface. Indeed, the three mechanical features can comprise (e.g. three or more) cylindrical members. The axes of said cylinders could be arranged to be contained within a plane. The axes of said cylinders could be arranged to intersect at a common point. In those embodiments in which the three or more mechanical features are arranged on a (third) notional circular line (e.g. concentrically with respect to the first and second sets of electrical contacts), said common point of intersection of the axes of said cylinders could be located at the centre point of the (third) notional circular line.

The mechanical features of the electromechanical interface could comprise the first half of a kinematic mount, the second half being provided by counterpart mechanical features on a counterpart electromechanical interface. Accordingly, the mechanical features on the electromechanical interface and the mechanical features on a counterpart electromechanical interface could configured such that when they are brought into engagement, there are six points of contact therebetween, by which the relative position of the electromechanical interface and counterpart electromechanical interface in all six degrees of freedom are constrained.

Accordingly, in the embodiment in which the (e.g. three or more) mechanical features (for interacting with one or more counterpart features on a counterpart electromechanical interface are configured to physically constrain the relative position of the electromechanical interfaces) each present a cylindrical surface, (e.g. the axes of which are contained within a plane and intersect at a common point), the counterpart mechanical features on the counterpart electromechanical interface can comprise (e.g. three or more) counterpart mechanical features, or (e.g. three or more) groups of counterpart mechanical features, which are configured such that when the two electromechanical interfaces are brought into engagement, each cylindrical surface is contacted by a corresponding/respective one of the (e.g. three or more) counterpart mechanical features, or (e.g. three or more) groups of counterpart mechanical features, at two points, one on each side of the apex of the cylindrical surface. In a particularly preferred embodiment, the counterpart mechanical features on the counterpart electromechanical interface each present a V-shaped form for sitting astride each cylindrical surface. Such a V-shape surface could be provided by a V-shaped cut in a part, or for example via a pair of adjacent cylindrical surface or a pair of adjacent spherical surfaces (e.g. provided by a pair of cylindrical or spherical members).

The electromechanical interface can comprise one or more rotational orientation features, for cooperation with corresponding one or more counterpart orientation features on a counterpart electromechanical interface which restrict the number of predetermined orientations (e.g. orientations within a plane that extends perpendicular to the above-mentioned predetermined direction, e.g. around the mechanical feature distribution axis) at which the two electromechanical interfaces can be bought into engagement. In a preferred embodiment, this can be such that the electromechanical interface and the counterpart electromechanical interfaces can be bought together, such that their corresponding mechanical features (which physically constrain the relative position of the electromechanical interfaces) (i.e. their "position-constraining features") can engage in one predetermined orientation only (e.g. rotational orientation within a plane that extends perpendicular to the above-mentioned predetermined direction, e.g. rotational orientation around the mechanical feature distribution axis). This can be helpful for those embodiments in which there is only one orientation at which the corresponding electrical contacts properly connect, but in which the aforesaid mechanical/"position-constraining features" are arranged (for example symmetrically), such that, but for the aforementioned corresponding orientation features, they (i.e. the mechanical/"position-constraining features") can engage at multiple different orientations (e.g. about the axis of symmetry). Preferably, the corresponding orientation features of the electromechanical interface and the counterpart electromechanical interface are configured such that they do not touch each other, or another part of the opposing electromechanical interface, when the aforementioned "position-constraining features" of the two electromechanical interfaces are engaged at said predetermined orientation(s). This is beneficial because it ensures that the orientation features do not interfere with the relative seated position of the electromechanical interfaces when their corresponding "position-constraining features" are engaged.

The electromechanical interface can also comprise bias means, e.g. one or more bias devices/members, for retaining a counterpart electromechanical interface on the one or more mechanical features. Such bias means/devices/member could comprise a mechanical member, e.g. for mechanically engaging with a counterpart mechanical member so as to pull the two electromechanical interfaces together, e.g. along the above-mentioned "first" or "predetermined" direction (along which the second set of electrical contacts are "set back" relative to the first set of electrical contacts), in particular along the predetermined engagement direction. For example, the electromechanical interface could comprise a protruding peg which is configured to be received by a rotatable cam member provided by the counterpart electromechanical interface (or vice versa), such that the rotatable cam member can be rotated so as to engage with and pull on the peg, and thereby pull the two electromechanical interfaces together (such that their corresponding mechanical features and electrical contacts engage). The protruding peg can be a substantially longitudinal member, the length of which extends along the above-mentioned "first" or "predetermined" direction (along which the second set of electrical contacts are "set back" relative to the first set of electrical contacts), in particular along the predetermined engagement direction. The protruding peg could be arranged centrally with respect to the first and/or second set of electrical contacts, and/or with respect to the mechanical features. Accordingly, the protruding peg, first set of electrical contacts, second set of electrical contacts, and the mechanical features (for interacting with one or more counterpart features on a counterpart electromechanical interface are configured to physically constrain the relative position of the electromechanical interfaces), could all be arranged concentrically with respect to each other. Such bias means/devices/member could comprise a magnetic member, at least one of which could be provided on the electromechanical interface and/or at least one which is provided on the counterpart electromechanical interface.

The one or more mechanical features (for interacting with one or more counterpart features on a counterpart electromechanical interface are configured to physically constrain the relative position of the electromechanical interfaces) and the first and second sets of electrical contacts can be provided on a common face at a first end of the electromechanical interface. The bias means can also be provided on said common face. The orientation feature can also be provided on said common face.

Each electrical contact of the first and second sets of electrical contacts can have a "free" or "contacting" end, (i.e. the end of the electrical contact which is configured to contact with a corresponding electrical contact on a counterpart electromechanical interface).

The plurality of electrical contacts in the first set of electrical contacts can be arranged such that they (e.g. their "free" or "contacting" end) have/occupy substantially the same position as each other in a first dimension, but are ("laterally") spread out/distributed in one or two dimensions perpendicular to the first dimension. Accordingly, the second set of electrical contacts can be set back relative to the first set of electrical contacts in said first dimension. The plurality of electrical contacts in the second set of electrical contacts can be arranged such that they (e.g. their "free" or "contacting" end) have/occupy substantially the same position as each other in the first dimension (but at a different position to that of the first set of electrical contacts) but are ("laterally") spread out/distributed in one or two dimensions perpendicular to the first dimension.

The second set of electrical contacts of the electromechanical interface can be set back compared to the first set of electrical contacts, such that the "free"/"contacting" ends of the first set of electrical contacts lie at a first position along the above-mentioned "first" or "predetermined" direction (e.g. predetermined engagement direction), and the "free"/"contacting" ends of the second set of electrical contacts lie at a second, different, position along the "first" or "predetermined" direction (e.g. predetermined engagement direction).

In those embodiments in which the first and second sets of electrical contacts are arranged on respective notional circular lines, the second set of electrical contacts of the electromechanical interface can be set back compared to the first set of electrical contacts, such that the "free"/"contacting" ends of the first set of electrical contacts lie at a first position along the electrical contact distribution axis about which said circular lines extend, and the "free"/"contacting" ends of the second set of electrical contacts lie at a second, different, position along the electrical contact distribution axis about which of said circular lines extend.

The "free"/"contacting" ends of the first set of electrical contacts could all be contained within/lie on a first notional plane. That is, in other words, the "free"/"contacting" ends of all of the electrical contacts of the first set of electrical contacts could all be contained within/lie on a first notional plane. The "free"/"contacting" ends of the second set of electrical contacts could all be contained within/lie on a second notional plane. That is, in other words, the "free"/"contacting" ends of all of the electrical contacts of the second set of electrical contacts could all be contained within/lie on a second notional plane. The first and second notional planes could be substantially parallel to each other, but offset to one another (i.e. such that they are not coplanar). The planes could be offset along the predetermined direction, e.g. offset along the predetermined engagement direction. In those embodiments in which the first and second sets of electrical contacts are arranged on respective notional circular lines (e.g. which can be concentric), the planes could be offset along the along the axis/axes about which of said circular lines extend.

The electrical contacts of the first and second sets of electrical contacts could comprise elongate electrically conductive pins. Preferably the pins are all arranged parallel to each other. The pins could be arranged substantially parallel to the above-mentioned "first" or "predetermined" direction (e.g. predetermined engagement direction). The pins could have a "free" or "contacting" end (i.e. as described above, for contacting with a corresponding electrical contact on a counterpart electromechanical interface).

The electrical contacts of the first and/or second sets of electrical contacts (e.g. the elongate electrically conductive pins) could be rigidly mounted relative to the one or more mechanical features (for interacting with one or more counterpart features on a counterpart electromechanical interface are configured to physically constrain the relative position of the electromechanical interfaces). Optionally, the electrical contacts of the first and/or second sets of electrical contacts (e.g. the elongate electrically conductive pins) could be resiliently displaceable, in particular (in the relevant embodiments) along the above-mentioned predetermined direction (e.g. predetermined engagement direction) and/or along said axis about which the first and second notional circular lines extend, relative to the one or more mechanical features. Accordingly, the electrical contacts of the first and/or second sets of electrical contacts (e.g. the elongate electrically conductive pins) could be sprung loaded. In a particular preferred embodiment, the electrical contacts of the first and/or second sets of electrical contacts (e.g. the elongate electrically conductive pins) are rigidly mounted relative to the one or more mechanical features, and counterpart electrical contacts on a counterpart electromechanical interface are resiliently displaceable/spung loaded, such that they can be displaced by the corresponding electrical contacts of the first and/or second sets of electrical contacts of the electromechanical interface, and biased thereinto, when the two electromechanical interfaces are brought together such that their corresponding mechanical features (for physically constraining their relative position) are in engagement.

The electromechanical interface can comprise a housing. The housing can be a metallic housing. In such a case, the first and second sets of electrical contacts can be supported in the housing via a non-metallic/electrically non-conductive, electrically insulating member (or "insert"), e.g. a plastic member (or "insert"). They could be supported in the housing via the same non-metallic/electrically non-conductive, electrically insulating member, or different non-metallic/electrically non-conductive, electrically insulating members. As will be understood, the electrical contacts of the first and second sets of electrical contacts can comprise any suitable electrically conductive material, e.g. metallic material.

The device could be an inspection device. The device could be a contact device (e.g. a contact probe) or a non-contact device (e.g. a non-contact probe). The inspection device could be configured for measuring/determining the position of one or more points on the artefact. Examples of suitable contact probes include so-called touch-trigger probes, scanning or analogue probes, and surface finish probes. The device (e.g. contact probe) can comprise a body and a stylus for contacting an artefact to be inspection, the stylus being deflectable relative to the body. As will be understood, in such a deflection of the stylus relative to the body can be detected/output; in particular, for example in a touch-trigger probe deflection beyond a threshold deflection causes a "triggered" signal to be provided, and in an analogue/scanning probe an output of the extent of deflection can be provided.

Features described in connection with the other aspects of the invention are also applicable to this second aspect of the invention (either in isolation or in combination) and vice versa.

According to a third aspect of the invention there is provided a counterpart electromechanical interface which comprises: counterpart mechanical features for mechanically fitting with the mechanical features of an (primary) electromechanical interface according to the second aspect of the invention; and a first set of (counterpart) electrical contacts for electrically connecting to one of the first and second sets of electrical contacts of an (primary) electromechanical interface of the second aspect of the invention.

The counterpart electromechanical interface can comprise (in addition to the first set of electrical contacts) a second set of (counterpart) electrical contacts for electrically connecting to the other of the first and second sets of electrical contacts of the (primary) electromechanical interface.

In other words, in accordance with the third aspect of the invention, there is provided a counterpart electromechanical interface for mounting on an (primary) electromechanical interface according to the second aspect of the invention, the counterpart electromechanical interface comprising: counterpart mechanical features for mechanically fitting with the mechanical features of the (primary) electromechanical interface so as to physically constrain the relative position of the two electromechanical interfaces; and one or more counterpart electrical contacts arranged such that, when the two electromechanical interfaces are mechanically fitted together via the aforementioned mechanical features, the counterpart electromechanical interface is electrically connected thereby to:
∘ at least one of (e.g. a plurality of, optionally all of) the electrical contacts of the first set of electrical contacts of the (primary) electromechanical interface, and none of the electrical contacts of the second set of electrical contacts of the electromechanical interface; or
∘ at least one of (e.g. a plurality of, optionally all of) the electrical contacts of the second set of electrical contacts of the (primary) electromechanical interface and none of the electrical contacts of the first set of electrical contacts of the electromechanical interface; or
∘ at least one of (e.g. a plurality of, optionally all of) the electrical contacts of the first set of electrical contacts of the (primary) electromechanical interface and at least one of (e.g. a plurality of, optionally all of) the electrical contacts of the second set of electrical contacts of the electromechanical interface.

Features described in connection with the other aspects of the invention are also applicable to this third aspect of the invention (either in isolation or in combination) and vice versa. In particular, aspects of such a counterpart electromechanical interface are described above in connection with the second aspect of the invention, and are not repeated here in their entirety for the sake of brevity. Nevertheless, it should be clear that in accordance with the second aspect of the invention, the counterpart electromechanical interface can similarly comprise: i) a first set of electrical contacts arranged to electrically connect to one or more of the electrical contacts of the first set of electrical contacts of the (primary) electromechanical interface; and ii) a second set of electrical contacts arranged to electrically connect to one or more of the electrical contacts of the second set of electrical contacts of the (primary) electromechanical interface, wherein the first set of electrical contacts of the counterpart electromechanical interface are arranged so as to be set back relative to the second set of electrical contacts (i.e. the other way around compared to the (primary) electromagnetic interface on which the counterpart electromagnetic interface is to be mounted).

Accordingly, in accordance with the invention there can be provided (and there is described herein) a device comprising: an electromechanical interface according to the second aspect of the invention; or a counterpart electromechanical interface according to the third aspect of the invention. The device could comprise an inspection device, e.g. a measurement probe, in particular a position measurement probe (for example, for measuring/determining the position of one or more points on the artefact, examples of which include so-called touch-trigger probes, scanning or analogue probes, and surface finish probes). Features described in connection with the other aspects of the invention (in particular the second and third aspects of the invention) are also applicable to such a device (either in isolation or in combination) and are not repeated here for the sake of brevity.

According to a fourth aspect of the invention there is provided a pair of electromechanical interfaces, comprising: an (primary) electromechanical interface as defined in accordance with any of the above-described options and variants of the second aspect of the invention; and a counterpart electromechanical interface. The counterpart electromechanical interface can comprise: counterpart mechanical features for mechanically fitting with the mechanical features of the (primary) electromechanical interface; and a first set of electrical contacts for electrically connecting to one of the first and second sets of electrical contacts of the (primary) electromechanical interface.

In other words, the counterpart electromechanical interface comprises: counterpart mechanical features for mechanically fitting with the mechanical features of the electromechanical interface; and one or more counterpart electrical contacts arranged such that, when the two electromechanical interfaces are mechanically fitted together via the aforementioned mechanical features, the counterpart electromechanical interface is electrically connected thereby to:
∘ at least one of (e.g. a plurality of, optionally all of) the electrical contacts of the first set of electrical contacts of the (primary) electromechanical interface, and none of the electrical contacts of the second set of electrical contacts of the (primary) electromechanical interface; or
∘ at least one of (e.g. a plurality of, optionally all of) the electrical contacts of the second set of electrical contacts of the (primary) electromechanical interface and none of the electrical contacts of the first set of electrical contacts of the (primary) electromechanical interface; or
∘ at least one of (e.g. a plurality of, optionally all of) the electrical contacts of the first set of electrical contacts of the (primary) electromechanical interface and at least one of (e.g. a plurality of, optionally all of) the electrical contacts of the second set of electrical contacts of the (primary) electromechanical interface.

Features described in connection with the other aspects of the invention are also applicable to this fourth aspect of the invention (either in isolation or in combination) and vice versa. In particular, aspects of such a counterpart electromechanical interface are described above in connection with the second and third aspects of the invention, and are not repeated here in their entirety for the sake of brevity. Nevertheless, it should be clear that in accordance with the second and third aspects of the invention, the counterpart electromechanical interface can similarly comprise: i) a first set of electrical contacts arranged to electrically connect to one or more of the electrical contacts of the first set of electrical contacts of the (primary) electromechanical interface; and ii) a second set of electrical contacts arranged to electrically connect to one or more of the electrical contacts of the second set of electrical contacts of the (primary) electromechanical interface, wherein the first set of electrical contacts of the counterpart electromechanical interface are arranged so as to be set back relative to the second set of electrical contacts (i.e. the other way around compared to the (primary) electromagnetic interface on which the counterpart electromagnetic interface is to be mounted).

According to a fourth aspect of the invention there is provided a head unit via which a device can be mounted onto a positioning apparatus, the head unit comprising: at a first end of the head unit, an electromechanical interface as defined in accordance with any of the above-described aspects of the invention for mounting a device thereon; and at a second end of the head unit a head-mount interface for mounting the head unit on a positioning apparatus.

The head unit can comprise a first articulated joint configured such that the angular orientation of the electromechanical interface relative to the head-mount interface can be adjusted about a first axis. Accordingly, the head unit could be referred to as an "articulated head unit". The head unit can comprise a second articulated joint such that the angular orientation of the electromechanical interface relative to the head-mount interface can be adjusted about a second axis that is orthogonal to the first axis. A head unit having two axes of rotation can be referred to as a "two-axis articulated head". The head unit can comprise one or more actuators (e.g. electric motors) for changing the angular configuration of the articulated joint(s), e.g. under instruction from a controller.

The head unit could be a so-called indexed articulated head, which (as will be understood by a person skilled in the art of CMMs) means that the articulated joint(s) has (have) a defined number of orientations into which the articulated joint can be "locked" or "indexed" before a measurement/operation/task is performed. This is in contrast to what is known in the field of CMMs as an "active" or "servoing" articulated head, in which the articulated head's actuator(s) (e.g. electric motor(s)) is (are) constantly servoed in order to control the orientation of the articulated joints, e.g. either to hold the orientation of a device mounted thereon, or to change the orientation of a device mounted thereon, for instance whilst measurements are taken).

The head unit can comprise one or more positioning sensing devices for determining the current angular configuration of the articulated joint(s) (i.e. such that the orientation of the electromechanical interface relative to the head-mount interface can be determined), e.g. for reporting to a controller.

As described in elsewhere in this document, in particular in connection with the first aspect of the invention (the features of which are also applicable to this fourth aspect of the invention), the signals from the first set of electrical contacts can be passed through to a first plug or socket electrical connector on the head unit; and the signals from the second set of electrical contacts can be passed through to a second plug or socket electrical connector on the head unit. For example, the head unit's first set of electrical contacts of the electromechanical interface can be wired to a first plug or socket electrical connector provided on the head unit; and the head unit's second set of electrical contacts of the electromechanical interface can be wired to a second plug or socket electrical connector provided on the head unit. However, as will be understood, this need not necessarily be the case, and for instance the first and second sets of electrical contacts could both be wired to one and the same (e.g. first) plug or socket electrical connector provided on the head unit. As will be understood, said plug or socket electrical connectors can be, for example, provided at the head unit's head-mount interface of the head unit, and can be for fitting with counterpart plug or socket electrical connectors on the positioning apparatus. As will be understood, the first and second plug or socket electrical connectors can be provided on the outside of the head unit.

As described in elsewhere in this document, in particular in connection with the first aspect of the invention, the head unit can comprise a first wiring set which terminates at a first end thereof at the first set of electrical contacts of the head unit's electromechanical interface, and which terminates at a second end thereof at a first plug or socket electrical connector. As also described elsewhere in this document, in particular in connection with the first aspect of the invention, the head unit can comprise a second wiring set, which is (electrically) independent of the first wiring set, and which terminates at a first end thereof at the second set electrical contacts of the head unit's electromechanical interface, and which terminates at a second end thereof at the same first plug as that of the first wiring set, or at a second plug or socket electrical connector. Further details of the first and second (independent) wiring sets are described elsewhere, in particular in connection with the seventh and first aspects of the invention, and for the sake of brevity are not repeated here. For instance, as described elsewhere, in particular in connection with the seventh and first aspects of the invention, one or more of the wiring sets can be configured to provide at least four differential pair transmission lines.

The positioning apparatus can be a coordinate positioning apparatus, for example a coordinate measuring machine (CMM). A positioning apparatus, such as a CMM, typically comprises a movement frame for moving a device relative to the artefact to be inspected/worked on. The movement frame could comprise, for example, a gantry, cantilever, arm, portal, parallel-kinematic, hexapod motion platform or bridge type movement frame.

The device could be an inspection device. The device could be a contact device (e.g. a contact probe) or a non-contact device (e.g. a non-contact probe). The inspection device could be configured for measuring/determining the position of one or more points on the artefact. Examples of suitable contact probes include so-called touch-trigger probes, scanning or analogue probes, and surface finish probes. Examples of suitable non-contact probes include camera probes, structured light projection probes, and line stripe probes. Other examples of suitable inspection devices include temperature probes and ultrasound probes.

Features described in connection with the other aspects of the invention are also applicable to this fourth aspect of the invention (either in isolation or in combination) and vice versa. In particular, further aspects of the head unit, are described below in connection with the first aspect of the invention, and for the sake of brevity are not repeated here. In particular, aspects regarding the first and second plug or socket electrical connector, are described below in connection with the first aspect of the invention.

According to a sixth aspect of the invention there is provided a kit comprising: i) a head unit described above in accordance with the fourth aspect of the invention; and ii) a device having a counterpart electromechanical interface, the counterpart electromechanical interface comprising:
- one or more counterpart mechanical features for fitting with the one or more mechanical features of the electromechanical interface of i) so as to constrain the relative position of the electromechanical interfaces of i) and ii) at a predefined relative position; and
- one or more counterpart electrical contacts arranged such that, when the mechanical features of the electromechanical interfaces of i) and ii) are fitted together, the electromechanical interface of ii) is electrically connected to:
   ∘ at least one of (e.g. a plurality of, optionally all of) the electrical contacts of the first set of electrical contacts of the electromechanical interface of i) and none of the electrical contacts of the second set of electrical contacts of the electromechanical interface of i); or
   ∘ at least one of (e.g. a plurality of, optionally all of) the electrical contacts of the second set of electrical contacts of the electromechanical interface of i) and none of the electrical contacts of the first set of electrical contacts of the electromechanical interface of i); or
   ∘ at least one of (e.g. a plurality of, optionally all of) the electrical contacts of the first set of electrical contacts of the electromechanical interface of i) and at least one of (e.g. a plurality of, optionally all of) the electrical contacts of the second set of electrical contacts of the electromechanical interface of i).

Features described in connection with the other aspects of the invention are also applicable to this sixth aspect of the invention (either in isolation or in combination) and vice versa.

According to a seventh aspect of the invention there is provided an apparatus comprising a kit according to the sixth aspect of the invention, a communication unit, and a power supply for providing electrical power to the device and/or head unit. The apparatus can further comprise a positioning apparatus (e.g. "movement frame") on which the head unit is mounted. The positioning apparatus could comprise a coordinate positioning apparatus, e.g. a coordinate measuring machine. The communication unit can be configured to communicate with (e.g. send and/or receive signals to and/or from) the device, and/or the head unit, and/or the positioning apparatus.

The power supply can be configured to provide/supply electrical power to the device, and/or the head unit, and/or the positioning apparatus. As will be understood, a power supply may or may not comprise a power source (e.g. battery). Accordingly, the power supply may be configured to merely supply electrical power from an external source to the device (and/or head unit and/or positioning apparatus), e.g. can be configured to convert and/or regulate electrical power (e.g. current/voltage) from an external source.

The apparatus can be configured such that when the electromechanical interfaces of i) and ii) are fitted together, the electromechanical interface of ii) is electrically connected to:
- at least one of (e.g. a plurality of, optionally all of) the electrical contacts of the first set of electrical contacts of the electromechanical interface of i) via which electrical power is supplied to the device from the power supply; and
- at least one of (e.g. a plurality of, optionally all of) the electrical contacts of the second set of electrical contacts of the electromechanical interface of i), via which the device can send electrical signals to the communication unit.

Optionally, the communication unit is also configured to send electrical signals to the device (and/or head and/or positioning apparatus/movement frame). The communication unit can be configured to communicate with (e.g. receive signals from and/or send signals to) the device (and/or head unit and/or positioning apparatus) via analogue and/or digital communication signals. In accordance with other described aspects of the invention, the communication unit can be configured to communicate with the device (and/or head unit and/or positioning apparatus) via/in accordance with the Gigabit Ethernet standard as defined in IEEE 802.3-2022 29 July 2022, for instance at speeds of operation of at least 1 Gigabit per second (i.e. 1000BASE-T1), preferably speeds of operation of at least 2.5 Gigabits per second (i.e. 2.5GBASE-T), more preferably speeds of operation of at least 5 Gigabits per second (i.e. 5GBASE-T), especially preferably speeds of operation of at least 10 Gigabits per second (i.e. 10GBASE-T). (IEEE = Institute of Electrical and Electronic Engineers). Accordingly, the electrical contacts and/or the wiring set(s) described in connection with the other aspects of the invention can be configured to facilitate communication between the communication unit and the device (and/or head unit and/or positioning apparatus) via/in accordance with the Gigabit Ethernet standard as defined in IEEE 802.3-2022 29 July 2022.

In a particularly preferred embodiment, the apparatus is configured such when the electromechanical interfaces of i) and ii) are fitted together the electromechanical interface of ii) is electrically connected to at least eight electrical contacts of the second set of electrical contacts of the electromechanical interface of i), which form part of four (sets of) differential pair transmission lines between the communication unit and device (via which the communication unit can communicate with, e.g. receives signals from, the device).

Accordingly, electrical power can be supplied to the device via at least one of (e.g. a plurality of, optionally all of) the electrical contacts of the first set of electrical contacts of the electromechanical interface of i), and at least one of (e.g. a plurality of, optionally all of) the electrical contacts of the second set of electrical contacts of the electromechanical interface of i) can be used to communicate with (e.g. receive and/or send signals from and/or to) the device, e.g. via/in accordance with the Gigabit Ethernet standard, e.g. via four differential pair transmission lines.

The communication unit and/or power supply could be external to the head unit (and/or positioning apparatus). As will be understood the communication unit and power supply could be part of the same device, e.g. a controller. Accordingly, the apparatus can comprise a controller (comprising a communication unit and/or power supply).

Accordingly, there is described herein an apparatus comprising, a positioning apparatus (or "movement frame"), a communication unit, a power supply and head unit via which a device can be mounted onto the positioning apparatus, and a device for mounting on the head unit, wherein:
- the head unit comprises:
   - at a first end of the head unit, an electromechanical interface comprising:
      ∘ one or more mechanical features for interacting with one or more counterpart mechanical features on a counterpart electromechanical interface for physically constraining the relative position of the electromechanical interfaces;
      ∘ a first set of electrical contacts for electrically connecting with a first set of electrical contacts on a counterpart electromechanical interface; and
      ∘ a second set of electrical contacts, different to and separate from the first set of electrical contacts, for electrically connecting with a second set of electrical contacts on a counterpart electromechanical interface;
      wherein the second set of electrical contacts of the electromechanical interface are arranged so as to be set back relative to the first set of electrical contacts; and
   - at a second end of the head unit a head-mount interface for mounting the head unit on a positioning apparatus;
- a device having a counterpart electromechanical interface which comprises:
   - one or more counterpart mechanical features for fitting with the one or more mechanical features of the head unit's electromechanical interface so as to constrain the relative position of the electromechanical interfaces of the head unit and the device at a predefined relative position;
   - one or more counterpart electrical contacts arranged such that, when the mechanical features of the electromechanical interfaces of the head unit and device are fitted together, the electromechanical interface of the device is electrically connected to:
      ∘ at least one of (e.g. a plurality of, optionally all of) the electrical contacts of the first set of electrical contacts of the electromechanical interface of the head unit and none of the electrical contacts of the second set of electrical contacts of the electromechanical interface of the head unit; or
      ∘ at least one of (e.g. a plurality of, optionally all of) the electrical contacts of the second set of electrical contacts of the electromechanical interface of the head unit and none of the electrical contacts of the first set of electrical contacts of the electromechanical interface of the head unit; or
      ∘ at least one of (e.g. a plurality of, optionally all of) the electrical contacts of the first set of electrical contacts of the electromechanical interface of the head unit and at least one of (e.g. a plurality of, optionally all of) the electrical contacts of the second set of electrical contacts of the electromechanical interface of the head unit.

In particular, the device can comprise a plurality of counterpart electrical contacts arranged such that when the mechanical features of the electromechanical interfaces of the head unit and device are fitted together, the power supply can provide electrical power to the device via at least one of (e.g. a plurality of, optionally all of) the electrical contacts of the first set of electrical contacts, and the communication unit can communicate with the device via at least one of (e.g. a plurality of, optionally all of) the electrical contacts of the second set of electrical contacts.

Features described in connection with the other aspects of the invention are also applicable to this seventh aspect of the invention (either in isolation or in combination) and vice versa. In particular, aspects of such a counterpart electromechanical interface are described above in connection with the second aspect of the invention, and are not repeated here in their entirety for the sake of brevity. Nevertheless, it should be clear that in accordance with the second aspect of the invention, the counterpart electromechanical interface can comprise: i) a first set of electrical contacts arranged to electrically connect to one or more of the electrical contacts of the first set of electrical contacts of the (primary) electromechanical interface; and ii) a second set of electrical contacts arranged to electrically connect to one or more of the electrical contacts of the second set of electrical contacts of the (primary) electromechanical interface, wherein the first set of electrical contacts of the counterpart electromechanical interface are arranged so as to be set back relative to the second set of electrical contacts (i.e. the other way around compared to the (primary) electromagnetic interface on which the counterpart electromagnetic interface is to be mounted).

According to a eighth aspect of the invention there is provided a device, for example a measurement probe, for instance a position measurement probe, comprising an electromechanical interface as defined in accordance with any of the above-described options and variants of the second aspect of the invention, for example comprising a counterpart electromechanical interface as defined in accordance with the above-described third aspect of the invention.

Features described in connection with the other aspects of the invention are also applicable to this eighth aspect of the invention (either in isolation or in combination) and vice versa.

Embodiments of the invention will now be described, by way of example only, with reference to the following drawings, in which:

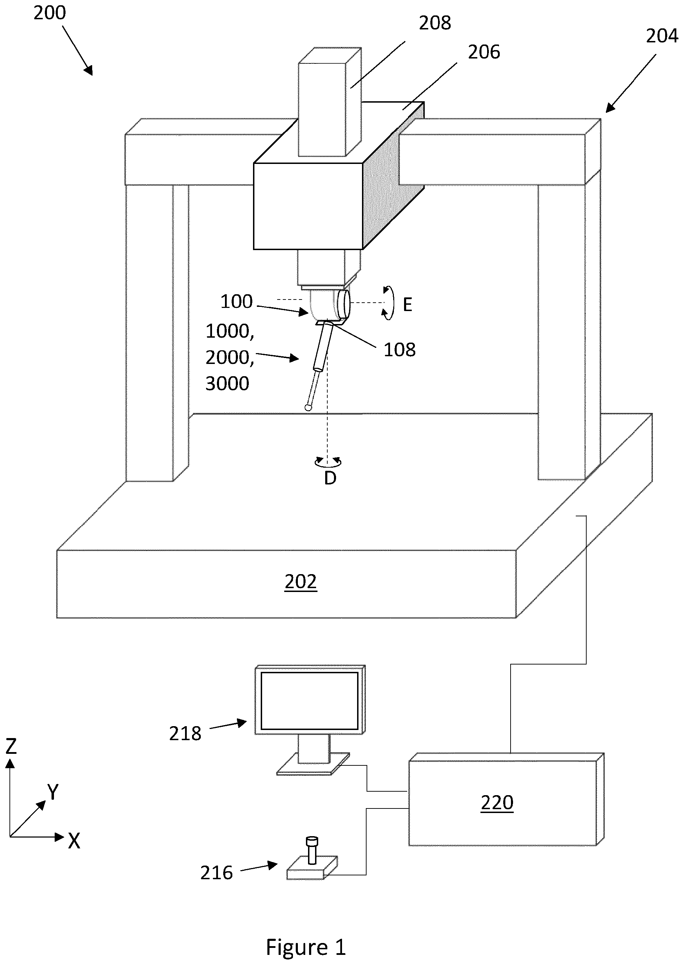

Figure 1 illustrates an articulated head unit having an electromechanical interface according to the present invention mounted on a coordinate measuring machine (CMM);
Figure 1 illustrates an articulated head unit according to the present invention mounted on a coordinate measuring machine (CMM);
Figure 2 illustrates a first isometric view of the articulated head unit of Figure 1 in isolation;
Figure 3 illustrates a second isometric view of the articulated head unit of Figure 1 in isolation;
Figure 4a illustrates a close-up isometric view of the electromechanical interface of the articulated head unit of Figure 1;
Figure 4b illustrates a close-up plan view of the electromechanical interface of the articulated head unit of Figure 1;
Figures 5a and 5b schematically illustrates the wiring within the articulated head unit of Figure 1, between: i) the electromechanical interface at a first end of the articulated head unit, and ii) the plug/socket electrical connectors at a second end of the articulated head unit;
Figure 6a illustrates an isometric view of a first measurement probe suitable for mounting on the electromechanical interface of the articulated head unit of Figure 1;
Figure 6b illustrates a cross-sectional view of the electromechanical interface of the articulated head unit of Figure 1 and of the end of the first measurement probe for mounting thereon, at a position just before they are engaged;
Figure 6c illustrates a cross-sectional view of the electromechanical interface of the articulated head unit of Figure 1 and of the end of the first measurement probe for mounting thereon, in an engaged configuration;
Figure 7a illustrates an isometric view of a second measurement probe suitable for mounting on the electromechanical interface of the articulated head unit of Figure 1;
Figure 7b illustrates a close-up isometric view of the end of the second measurement probe that is for mounting on the electromechanical interface of the articulated head unit of Figure 1;
Figure 7c illustrates a cross-sectional view of the electromechanical interface of the articulated head unit of Figure 1 and of the end of the second measurement probe for mounting thereon, at a position just before they are engaged;
Figure 7d illustrates a cross-sectional view of the electromechanical interface of the articulated head unit of Figure 1 and of the end of the second measurement probe for mounting thereon, in an engaged configuration;
Figure 8a illustrates an isometric view of a third measurement probe suitable for mounting on the electromechanical interface of the articulated head unit of Figure 1;
Figure 8b illustrates a close-up isometric view of the end of the third measurement probe that is for mounting on the electromechanical interface of the articulated head unit of Figure 1;
Figure 8c illustrates a cross-sectional view of the electromechanical interface of the articulated head unit of Figure 1 and of the end of the third measurement probe for mounting thereon, at a position just before they are engaged;
Figure 8d illustrates a cross-sectional view of the electromechanical interface of the articulated head unit of Figure 1 and of the end of the third measurement probe for mounting thereon, in an engaged configuration;
Figure 9a illustrates a first isometric view of a prior art articulated head unit;
Figure 9b illustrates a second isometric view of the prior art articulated head unit of Figure 9a;
Figure 9c illustrates an isometric view of a prior art measurement probe suitable for mounting on the electromechanical interface of the articulated head unit of Figure 9a;
Figure 9d illustrates an isometric view of another prior art measurement probe;
Figures 9e and 9f illustrates isometric views of an adaptor for enabling the prior art measurement probe illustrated in Figure 9d to be mounted on the electromechanical interface of the articulated head unit of Figure 9a;
Figure 9g schematically illustrates the wiring within the articulated head unit of Figure 9a.

With reference to Figure 1 there is shown an articulated head unit 100 according to one aspect of the present invention mounted on a positioning apparatus 200. In this embodiment, the positioning apparatus 200 comprises a coordinate measuring machine ("CMM"). The CMM 200 comprises a base 202, supporting a frame 204 which in turn holds a carriage 206 which in turn holds a quill 208 (or "Z-column"). Motors (not shown) are provided to move the quill 208 along the three mutually orthogonal axes X, Y and Z (e.g. by moving the frame 204 along the Y axis, the carriage 206 along the X axis, and the quill 208 along the Z-axis).

The quill 208 holds the articulated head unit 100, which in turn holds a measurement probe 1000, 2000, 3000. In this embodiment, the articulated head unit 100 facilitates repositioning of the measurement probe 1000, 2000, 3000 mounted on it, about first and second rotational axes D, E as explained in more detail below.

The combination of the two rotational axes (D, E) provided by the articulated head unit 100 and the three linear (X, Y, Z) axes of translation of the CMM 200 allows the measurement probe 1000, 2000, 3000 to be moved/positioned in five degrees of freedom (two rotational degrees of freedom, and three linear degrees of freedom).

Although not shown, measurement encoders may be provided for measuring the relative positions of the base 202, frame 204, carriage 206, quill 208 and the relatively rotatable parts of the articulated head unit 100 so that the position of the measurement probe 1000, 2000, 3000 relative to a workpiece located on the base 202 can be determined.

A controller 220 is provided for controlling the operation of the CMM 200, such as controlling the position and orientation of the measurement probe 1000, 2000, 3000 within the CMM's movement/operating volume (either manually, e.g. via an input device such as joystick 216, or automatically, e.g. under the control of an inspection program) and for receiving information (e.g. position/measurement information) from the CMM 200, head unit 100 and device (in the embodiments described, measurement probe) mounted thereon. A display device 218 can be provided for aiding user interaction with the controller 220. The controller 220 could, for example, be a dedicated electronic control system and/or may comprise a personal computer. In the embodiment described, the controller 220 is configured to supply power to and communicate with the CMM 200, the head unit 100 and the probe mounted thereon. As will be understood, rather than there being one single unit (i.e. controller 220) for this, two or more separate devices could be provided. For instance, there could be separate devices for supplying power and for communicating with the CMM 200, the head unit 100 and the probe mounted thereon. Furthermore, as another example, each of the CMM, head and probe could have its own power supply and/or communication unit (e.g. either a combined unit or separate units).

In the embodiment shown, the measurement probe 1000, 2000, 3000 is a contact probe comprising a modular configuration which includes a probe body and a stylus, the stylus having a spherical tip for contacting a workpiece to be inspected and in this embodiment the stylus is deflectable relative to the probe body. The contact measurement probe 1000, 2000, 3000 could be what is commonly referred to as a touch-trigger probe, or could be a scanning (or analogue) probe. As will be understood, other types of contact probes such as an ultrasound probe or a surface finish probes having a reference surface/"skid" could be mounted on the articulated head unit 100. Also, non-contact probes, such as a camera probe or a fringe-projection probe, could be mounted on the articulated head unit 100.

The articulated head unit 100 comprises an electromechanical interface (also referred to in this embodiment as a "probe interface" or "probe mount") 108 for facilitating the swapping of different devices (having a suitable counterpart electromechanical interface) thereon. In particular, this could be an electromechanical interface which facilitates auto-changing of devices, such as measurement probes, to and from a rack (not shown) within the CMM's movement/operating volume.

It is possible for the articulated head unit 100 to comprise built-in sensor componentry for detecting the deflection of the stylus of a contact measurement probe mounted thereon. However, in the embodiments described herein, all such sensor componentry is provided within the body of the measurement probe 1000, 2000, 3000 itself.

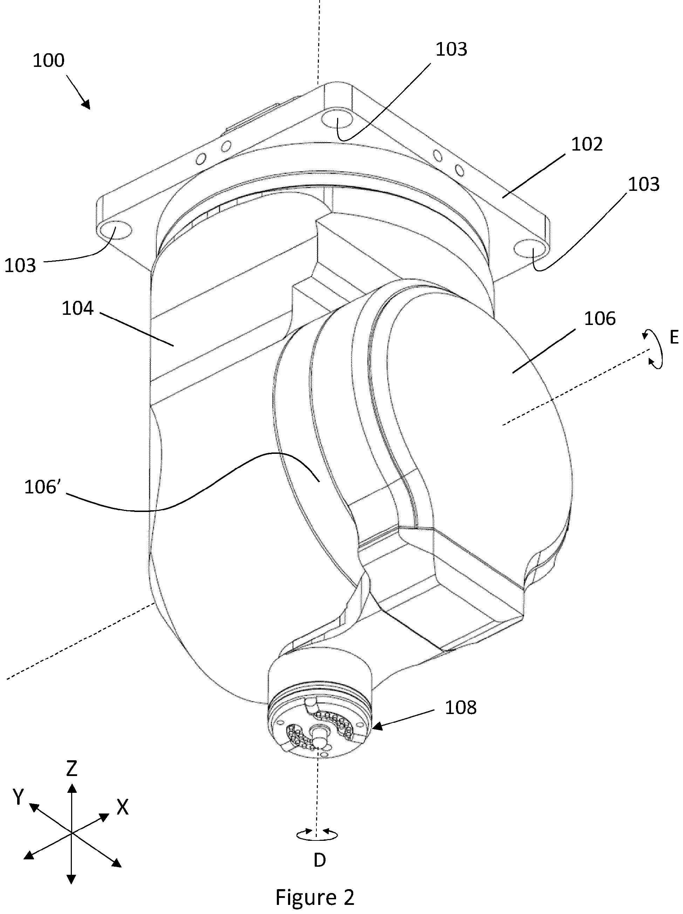

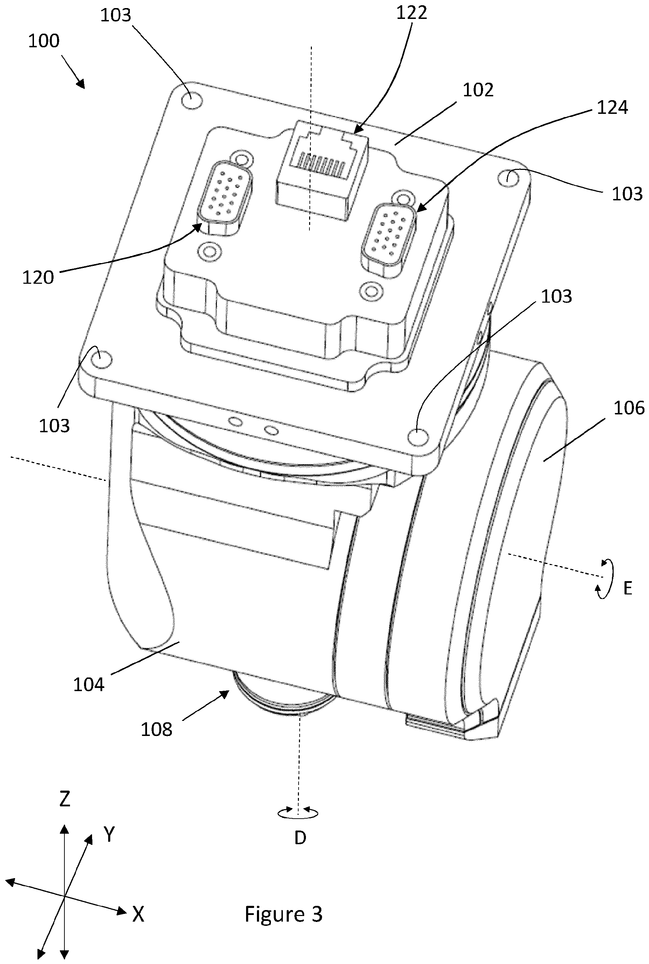

As shown in Figures 2 and 3, the articulated head unit 100 comprises, at a first end thereof, a first member 102. The first member 102 comprises holes 103 through which bolts can pass so as to mechanically fasten the articulated head unit 100 to the quill 208 of the CMM 200. The articulated head unit 100 also comprises a second member 104 which is articulatable/rotatable relative to the first member 102 about a first axis of rotation "D", and a third member 106 which is articulatable/rotatable relative to the second member 104 about a second axis of rotation "E". The second axis of rotation "E" is orthogonal to the first axis of rotation "D". In the embodiment described, the first axis of rotation "D" is arranged parallel to the CMM's Z-axis, but this need not necessarily be the case.

Referring to Figure 3, at a first end of the articulated head unit 100 (in particular, in this embodiment, on the first member 102) there are provided first 120, second 122 and third 124 plug or socket electrical connectors, each of which comprise a set of electrical contacts and a mechanical interface, for fitting with a counterpart plug or socket electrical connector on the coordinate positioning apparatus 200 (e.g. a counterpart electrical connector on the end of a cable of the coordinate positioning apparatus 200). In the particular embodiment described, each of the first 120, second 122 and third 124 electrical connectors are female/socket electrical connectors, configured to receive a male/plug electrical connector, but this need not necessarily be the case; indeed, it is immaterial to the invention whether each or any of the electrical connectors at the first end of the articulated head unit 100 are a female/socket electrical connector or a male/plug electrical connector.

In the embodiment shown, the first (socket) electrical connector 120 is similar to the D-Sub micro-D type "probe" connector 908 of the PH10 head unit (described above in connection with Figure 9) in that it is also a D-sub connector having 15 electrical pins (and in some embodiments it could be a D-Sub micro-D type connector), although in this embodiment the first (socket) electrical connector 120 is a high density D-sub connector (having 15 electrical contacts). The second (socket) electrical connector 122 is an RJ45 electrical connector) (e.g. according to ANSI/TIA-568-E, Dec 2020). The third (socket) electrical connector 124 is also a high density D-sub connector.

At a second end of the articulated head unit 100 (distal the first end) an electromechanical interface 108 is provided, in this embodiment on the third member 106, on which a device having a suitable counterpart electromechanical interface can be interchangeably mounted. In the embodiment described, and as explained in more detail below, the device having a suitable counterpart electromechanical interface is a measurement probe (such as the contact probe 1000, 2000, 3000).

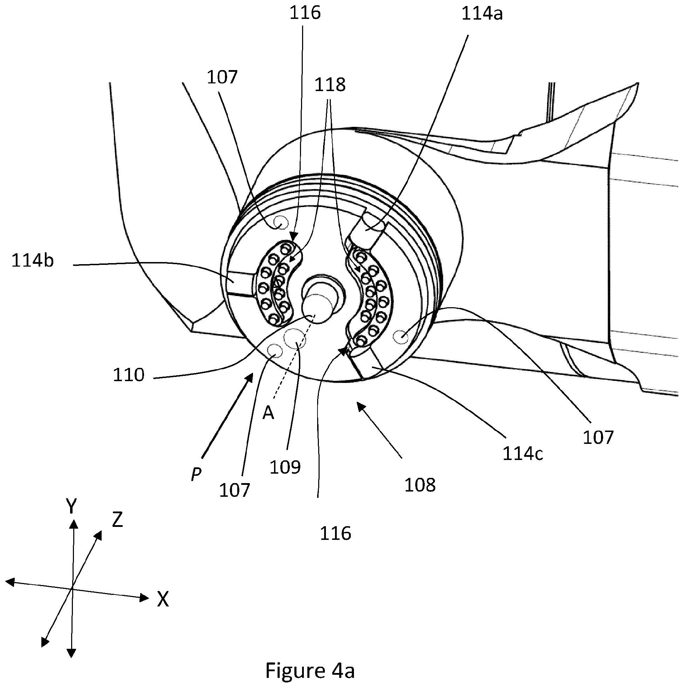

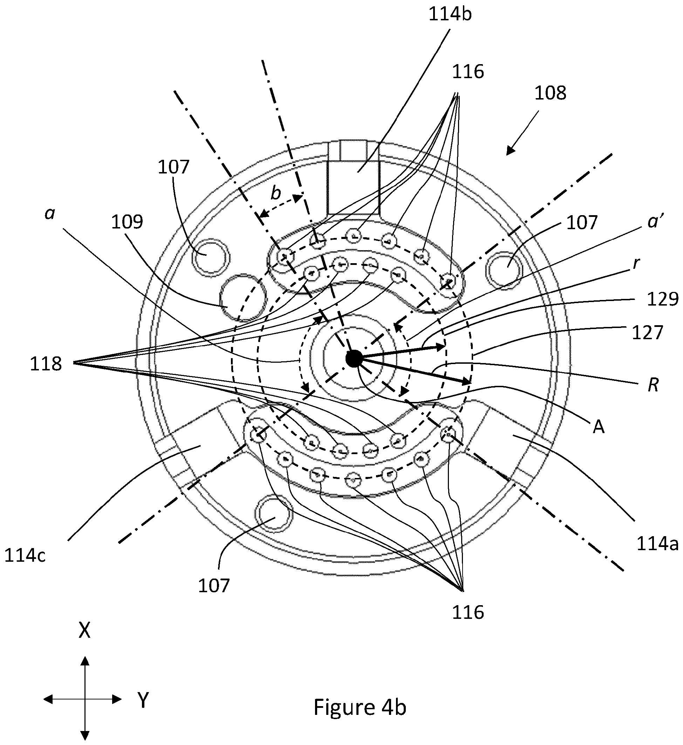

As shown in Figures 4a and 4b, in the embodiment described, the articulated head unit's electromechanical interface 108 comprises a set of mechanical/position-constraining features 114a, 114b, 114c, first 116 and second 118 sets of electrical contacts, and a peg 110. As shown in Figure 4a, the electrical contacts of the first set 116 of electrical contacts are laterally distributed/spread apart (in the arrangement shown in Figure 4a, in the Y-X space). Similarly, the electrical contacts of the second set 118 of electrical contacts are ("laterally") distributed/spread apart (in the arrangement shown in Figure 4a, in the Y-X space). As also shown in Figure 4a, the second set 118 of electrical contacts are ("longitudinally"/"axially") set back (in other words, "recessed"/"retreated"/"stepped back") compared to the electrical contacts of the first set 116 of electrical contacts (in the arrangement shown in Figure 4a, in the Z dimension).

The set of mechanical/position-constraining features 114a, 114b, 114c are arranged equiangularly around an axis A (a "mechanical feature distribution axis" A). In the embodiment described the position-constraining features 114a, 114b, 114c are in the form of cylindrical elements, arranged such that their axes (the axes of the cylinders) are contained within a plane and intersect at said axis A. As described in more detail below, the set of position-constraining features 114a, 114b, 114c are configured to mate with a corresponding set of mechanical/position constraining features 1004, 2004, 3004 on a counterpart electromechanical interface of a device (such as a measurement probe 1000, 2000, 3000) so as to constrain the relative positional arrangement of the device on the electromechanical interface 108.

In the embodiment described, the first set of electrical contacts 116 comprises thirteen individual electrical contacts, all of which lie on a first notional circular line 127 (or in other words, are arranged in a circular array) extending and centred on a first electrical contact distribution axis (which in this embodiment is the same axis A about which the mechanical/position-constraining features 114a, 114b, 114c are arranged and centred) having a first radius R . In the embodiment described, the second set of electrical contacts 118 comprises eight individual electrical contacts, all of which lie on a second notional circular line 129 (or in other words, are arranged in a circular array) extending and centred on a second electrical contact distribution axis (which in this embodiment is the same axis A about which the mechanical/position-constraining features 114a, 114b, 114c are arranged and centred) having a second radius r , wherein r < R. As shown, the electrical contacts in the first 116 and second 118 sets of electrical contacts are split into two groups.

In the embodiment described, the first set of electrical contacts 116 comprises a first group of six electrical contacts substantially equiangularly spaced relative to each other about the axis A, and a second group of seven electrical contacts substantially equiangularly spaced relative to each other about the axis A. The first and second groups of electrical contacts of the first set of electrical contacts 116, are separated from each other such that the angles *a, a'* between the neighbouring end contacts of each group is substantially larger than (e.g. is at least double) the angle b between adjacent contacts within each group.

In the embodiment described, the second set of electrical contacts 118 comprises a first group of four electrical contacts substantially equiangularly spaced relative to each other about the axis A, and a second group of four electrical contacts substantially equiangularly spaced relative to each other about the axis A. The first and second groups of electrical contacts of the second set of electrical contacts 118 are separated from each other such that the angle (which, unlike the angle *a*/*a'* for the first set of electrical contacts 116, is not illustrated in Figure 4b) between the neighbouring end contacts of each group is substantially larger than (e.g. is at least double) the angle between adjacent contacts within each group.

The set of position-constraining features 114 and the first 116 and second 118 sets of electrical contacts of the articulated head unit's electromechanical interface 108 are configured to engage with counterpart position-constraining features and counterpart electrical contacts on a counterpart electromechanical interface of a measurement probe (described in more detail below) by bringing the articulated head unit's electromechanical interface 108 and the counterpart electromechanical interface of a measurement probe together along a predetermined engagement direction P, in this case which is parallel with the axis A. As mentioned above, and for reasons which will be made clearer later on in this description, the first 116 and second 118 sets of electrical contacts of the articulated head unit's electromechanical interface 108 are configured such that the second set 118 of electrical contacts are ("longitudinally"/"axially") set back (in other words, "recessed"/"retreated"/"stepped back") compared to the electrical contacts of the first set 116 of electrical contacts. In the particular embodiment described, the first 116 and second 118 sets of electrical contacts of the articulated head unit's electromechanical interface 108 are configured such that: i) the probe-contacting/free ends of all of the first set 116 of electrical contacts lie at a first position along a first dimension/the predetermined engagement direction P; and ii) the probe-contacting/free ends of all of the second set 118 of electrical contacts lie at a second position along the same first dimension/predetermined engagement direction P. In other words, the probe-contacting/free ends of all of the first set 116 of electrical contacts are contained within a first plane which is perpendicular to the predetermined engagement direction P (and so in this embodiment, perpendicular to the axis A), and the probe-contacting/free ends of all of the second set 118 of electrical contacts are contained within a second plane which is perpendicular to the predetermined engagement direction P (and so in this embodiment, perpendicular to the axis A); the first and second planes being located at different positions along the predetermined engagement direction P (in this embodiment, along the axis A) - i.e. the first and second planes are not co-planar.

In the embodiment described, the first plane lies at a more outward position (relative to the articulated probe head unit 100) than the second plane (along the predetermined engagement direction P, or in this embodiment, along the axis A), such that the second set 118 of electrical contacts are set back compared to the electrical contacts of the first set 116 of electrical contacts. As shown, in the embodiment described, the first 116 and second 118 sets of electrical contacts are configured such that a notional plane that is perpendicular to the predetermined engagement direction P (or in this embodiment, perpendicular to the axis A) and which is travelling along the predetermined engagement direction P (or in this embodiment, along the axis A) will meet the first plane before it meets the second plane.

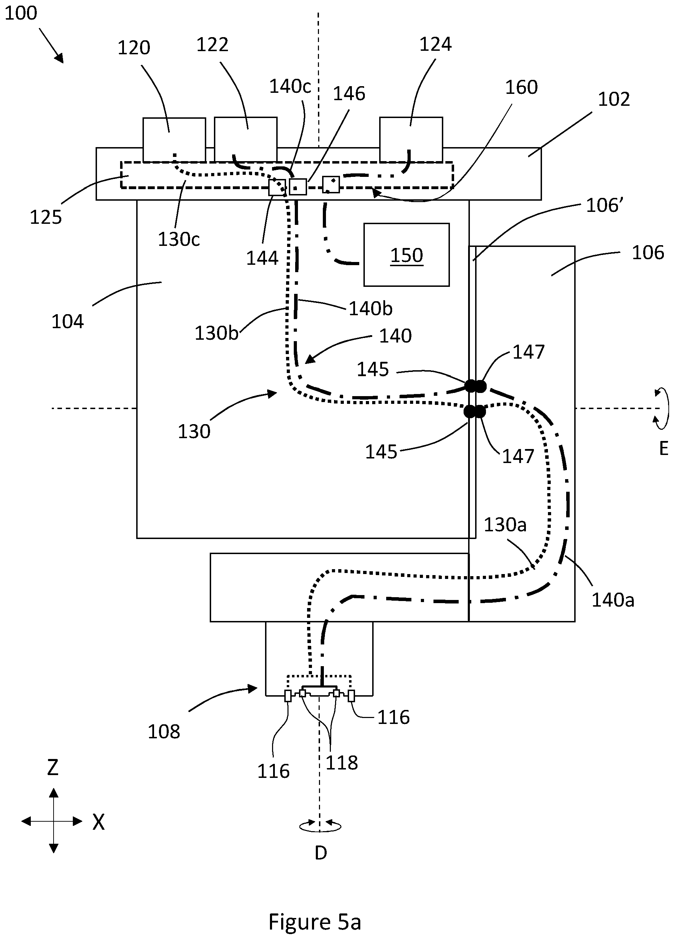

In an alternative embodiment, the third member 106 could comprise an interchangeable member. For instance, rather than being a part of the articulated head unit 100, the third member 106 could be interchangeable such that different types of third members can be mounted on the articulated head unit. In this case, the articulated head 100 could comprise a mount member 106' for the third member 106, the mount member 106' being articulatable/rotatable relative to the second member 104 about the second axis of rotation "E". The mount member 106' and third member 106 can be provided with cooperating position-constraining features, to enable the third member 106 to be detachably mounted to the mount member 106' in a repeatable manner. Such cooperating position-constraining features could comprise features defining a kinematic mount, for example. One or more magnets could be provided for retaining the third member 106 on the mount member 106'. The mount member 106' and third member 106 can also be provided with corresponding electrical contacts, as explained in more detail in connection with Figures 5a and 5b.

As schematically shown in Figures 5a and 5b, the first set 116 of electrical contacts are wired to the first (socket) electrical connector 120 and the second set 118 of electrical contacts are wired to the second (socket) electrical connector 122. In particular, there is a first wiring set designated generally by arrow 130, and a second wiring set designated generally by arrow 140. The first wiring set 130 terminates at a first end thereof at the first set 116 of electrical contacts at the probe interface 108, and terminates at a second end thereof at the electrical contacts of the first (socket) electrical connector 120. The second wiring set 140 terminates at a first end thereof at the second set 118 of electrical contacts at the probe interface 108, and terminates at a second end thereof at the electrical contacts of the second (socket) electrical connector 122. Accordingly, as will be understood, in this document, a "wiring set" includes the electrical contacts at either end at which it terminates. For example, in this embodiment, the first wiring set 130 includes the electrical contacts of the first set 116 of electrical contacts at the probe interface 108 and the electrical contacts of the first (socket) electrical connector 120, and the second wiring set 130 includes the electrical contacts of the second set 118 of electrical contacts at the probe interface 108 and the electrical contacts of the second (socket) electrical connector 122.

In the embodiment described, the first wiring set 130 comprises thirteen individual (signal/power) electrical conductor paths connecting the first set 116 of electrical contacts and the first (socket) electrical connector 120 - i.e. one (signal/power) electrical conductor path for each of the thirteen electrical contacts of the first set 116 of electrical contacts - such that electrical signals/power therefrom/to can be relayed to/from a corresponding individual electrical contact of the first (socket) electrical connector 120. Similarly, the second wiring set 140 comprises eight individual (signal/power) electrical conductor paths connecting the second set 118 of electrical contacts and the second (socket) electrical connector 122 - i.e. one (signal/power) electrical conductor path for each of the eight electrical contacts of the second set 118 of electrical contacts - such that electrical signals/power therefrom/to can be relayed to/from a corresponding individual electrical contact of the second (socket) electrical connector 122.

Each individual (signal/power) electrical conductor paths in a wiring set could comprise one single continuous wire/conductor from end-to-end (i.e. from an electrical contact of the first 116 or second 118 set of electrical contacts, to an electrical contact of the first 120 or second 122 (socket) electrical connector). However, this need not necessarily be the case. Indeed, it can advantageous that this isn't the case, and in the embodiment described, this isn't the case. For instance, as described in more detail below in connection with Figure 5b, a (signal/power) electrical conductor path can comprise a plurality of electrical wires/conductors coupled/connected together in series. One or more of such electrical wires/conductors could be provided on a printed circuit board (PCB) 125 (and such a conductor on a PCB would normally be referred to as a "trace"). One or more of such (signal/power) electrical wires/conductors could comprise a flexible wire. A plurality of said flexible wires for different electrical lines could be provided/bundled together, e.g. as part of single cable.

In the embodiment depicted in Figures 5a and 5b, the articulated head unit 100 is of a configuration wherein the third member 106 is an interchangeable member, and therefore the articulated head unit 100 comprises a mount member 106' for the third member 106. As mentioned above, the mount member 106' and third member 106 are provided with corresponding electrical contacts, so that the electrical contacts of the first 116 and second 118 sets of electrical contacts at the probe interface can be electrically connected to the first 120 and second 122 (socket) electrical connectors. In Figures 5a and 5b, the corresponding electrical contacts of the mount member 106' and third member 106 are respectively schematically depicted by the black dots labelled 145 and 147. As will be understood, the electrical contacts of the mount member 106' and third member 106 could comprise corresponding pin-and-pad type electrical contacts. For instance, the electrical contacts of the mount member 106' and third member 106 could have a pad-and-pin configuration similar to those provided by and between the probe interface 108 and the measurement probes 1000, 2000, 3000 for mounting thereon (as explained in more detail below).

As schematically depicted in Figures 5a and 5b, in this embodiment, the first wiring set 130 comprises: i) a first cable 130a comprising thirteen individual wires/conductors; ii) a second cable 130b comprising thirteen individual wires/conductors; and iii) a first set 130c of (thirteen) individual traces provided by the PCB 125. In the embodiment described, the first cable 130a and the second cable 130b are each flat-flexible cables (FFCs). As also schematically depicted in Figures 5a and 5b, in this embodiment, the second wiring set 140 comprises: i) a first cable 140a comprising eight individual wires/conductors; ii) a second cable 140b comprising eight individual wires/conductors; and iii) a second set 140c of (eight) individual traces provided by the PCB 125. In the embodiment described, the first cable 140a and the second cable 140b are each flat-flexible cables (FFCs). Despite what is depicted in Figure 5b, the flat flexible cables of the first wiring set are arranged within the second 104 and third 106 members in an overlaid configuration (i.e. that is they are arranged directly on top of one another).

With regard to the first cable 130a of the first wiring set 130, as depicted in Figure 5b, each of the thirteen wires/conductors thereof is connected at first end to a corresponding individual electrical contact of the first set 116 of electrical contacts at the probe interface 108, and connected at second end to a corresponding individual electrical contact 147 at the interface/mount via which the third member 106 is mounted to the mount 106'. With regard to the first cable 140a of the second wiring set 140, each of the eight wires/conductors thereof is connected at first end to a corresponding individual electrical contact of the second set 118 of electrical contacts at the probe interface 108, and connected at second end to a corresponding individual electrical contact 147 at the interface/mount via which the third member 106 is mounted to the mount 106'. Accordingly, there will be at least twenty-one of such individual electrical contacts 147 provided by the third member at the interface/mount via which the third member 106 is mounted to the mount 106' (and at least twenty-one corresponding individual electrical contacts 145 provided on the mount 106').

With regard to the second cable 130b of the first wiring set 130, each of the thirteen wires/conductors thereof is connected at first end to a corresponding individual electrical contact 145 of the mount 106' and connected at a second end to a corresponding individual electrical contact of a first PCB connector 144, such that each of the thirteen wires/conductors of the second cable 130b is electrically connected to a corresponding individual trace of the first set 130c of (thirteen) individual traces provided by the PCB 125. With regard to the second cable 140b of the second wiring set 140, each of the eight wires/conductors therein is connected at first end to a corresponding individual electrical contact 145 of the mount 106' and connected at a second end to a corresponding individual electrical contact of a second PCB connector 146, such that each of the eight wires/conductors of the second cable 140b is electrically connected to a corresponding individual trace of the second set 140c of (eight) individual traces provided by the PCB 125.

With regard to first set 130c of (thirteen) individual traces provided by the PCB 125, each of the thirteen traces thereof is connected at first end to an individual electrical contact of the first PCB connector 144, (such that, as explained above, each individual trace of the first set 130c of (thirteen) individual traces provided by the PCB 125 is connected to a corresponding individual wire/conductor of the second cable 130b of the first wiring set 130), and connected at a second end to a corresponding individual electrical contact of the first (socket) electrical contact 120. With regard to second set 140c of (eight) individual traces provided by the PCB 125, each of the eight traces thereof is connected at first end to an individual electrical contact of the second PCB connector 146, (such that, as explained above, each individual trace of the second set 140c of (eight) individual traces provided by the PCB 125 is connected to a corresponding individual wire of the second cable 140b of the second wiring set 140), and connected at a second end to a corresponding individual electrical contact of the second (socket) electrical contact 122.

By way of the above described configuration, each electrical contact of the first set 116 of electrical contacts at the first probe interface 108 has its own individual signal conduction path to a corresponding individual electrical connector of the first (socket) electrical connector 120 on the first member 102, and similarly each electrical contact of the second set 118 of electrical contacts at the first probe interface 108 has its own individual signal conduction path to a corresponding individual electrical connector of the second (socket) electrical connector 122 on the first member 102.

In the embodiment described the first 130 and second 140 wiring sets differ in the number of individual signal conduction paths they provide (thirteen vs eight), but this need not necessarily be the case.

In the embodiment described the second wiring set 140 is designed and configured to a different electrical standard than that of the first wiring set 130. In particular, the second wiring set 140 is configured to support faster digital data transmission speeds than that of the first wiring set 130, and in the particular embodiment described has been configured to be compatible with the 10 Gigabit Ethernet standard as defined in IEEE 802.3-2022 29 July 2022, also known as 10GBASE-T. Accordingly, in the particular embodiment described, an end-user can electrically connect a controller 220 (or the like) to a probe mounted on the probe interface 108 (that is electrically connected to the second set 118 of electrical contacts) and communicate with it via Ethernet frames a rate of a 10 gigabits per second, e.g. via a Cat 5 cable (or better, e.g. could use a Cat 5e, or Cat 6 cable) which is plugged into the second (socket) electrical connector 122 on the first member 102.

Accordingly, in the embodiment described, the eight conductor paths of the second wiring set 140 are arranged in four pairs, wherein each pair forms a transmission line for a differential electrical signal. Therefore, in the embodiment described, there are four transmission lines (for differential electrical signals); which could also be referred to as "four transmission line pairs" or "four differential pair transmission lines".

As will be understood, a signal travelling from a transmitter to a receiver along an electrical transmission line with be partially or wholly reflected back to the transmitter whenever the signal encounters a change in the characteristic impedance of the transmission line. At the point in the transmission line where the characteristic impedance changes the amount of signal reflected and the amount transmitted depends on the two impedances. The more of the signal that is reflected, the more power is lost and the less efficient the transmission line becomes.

In an ideal scenario, there will be a 100 Ohm characteristic impedance maintained along the entire length of the four transmission lines. However, in practice, this is difficult to achieve and in the embodiment described, each section of the four transmission lines (i.e. the conductors of the first cable 140a; the conductors of the second cable 140b; and the second set of traces 140b provided by the PCB 125) are designed to have a nominal characteristic impedance of 100 Ohm +/-10%. Accordingly, each section of the four transmissions line might have a different nominal characteristic impedance (but preferably their nominal characteristic impedance is within 10% of 100 Ohm).

As will be understood, impedance matching of an electrical system/transmission line can be dependent on a number of factors, including the impedance characteristic of components, wires, conductors, traces and connectors used, as well as the physical geometry of, for instance, wires and connectors, which can include how they are physically arranged relative to each other. Accordingly, meeting such impedance matching requirements places greater constraints on the design on the second wiring set 140, and this is particularly true when the FFCs of the first 130 and second 140 wiring sets are arranged directly on top of one another. Indeed, the inventors have found that it in order to achieve the desired optimum nominal characteristic impedance of the second wiring set, it can be beneficial to design the conductors with the FFCs of the first 130 and second 140 wiring sets such that the differential pair conductors of the second wiring set 140 do not directly overlie conductors within the FFCs of the first wiring set 130, but instead are laterally offset/staggered relative thereto, so as to reduce electrical interference therebetween.

In the embodiments described, the first wiring set 130 is not specifically designed to be compatible with Gigabit Ethernet and in particular is not designed with any specific impedance matching characteristics in mind, and therefore has fewer/no constraints in that respect compared to the second wiring set 140.

In other preferred embodiments, the second wiring set 140 can be configured to be compatible with the Ethernet standard as defined in IEEE 802.3-2022 29 July 2022 so as to provide speeds of operation of at least 1 Gigabit per second (i.e. 1000BASE-T1), preferably speeds of operation of at least 2.5 Gigabits per second (i.e. 2.5GBASE-T), more preferably speeds of operation of at least 5 Gigabits per second (i.e. 5GBASE-T), especially preferably speeds of operation of at least 10 Gigabits per second (i.e. 10GBASE-T).

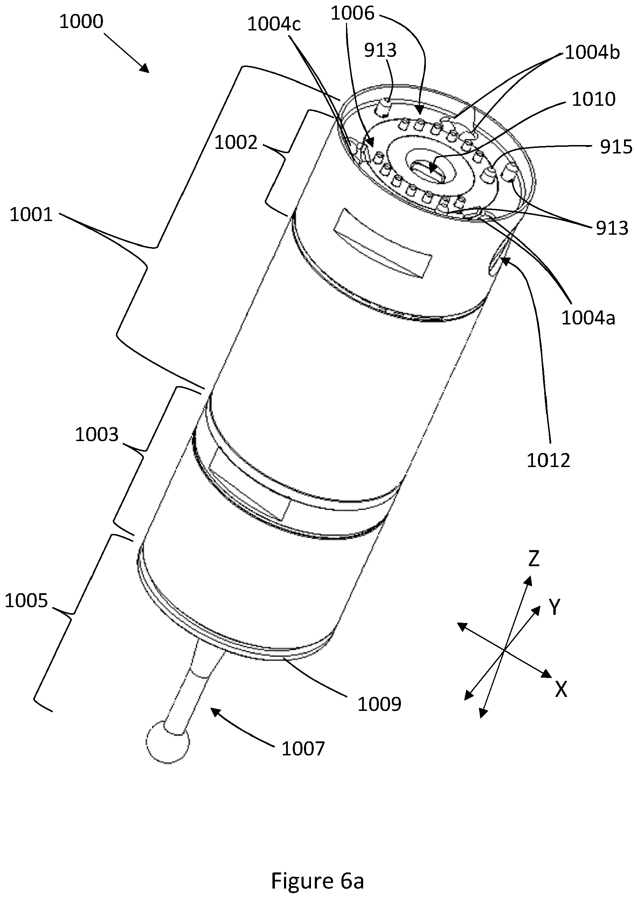

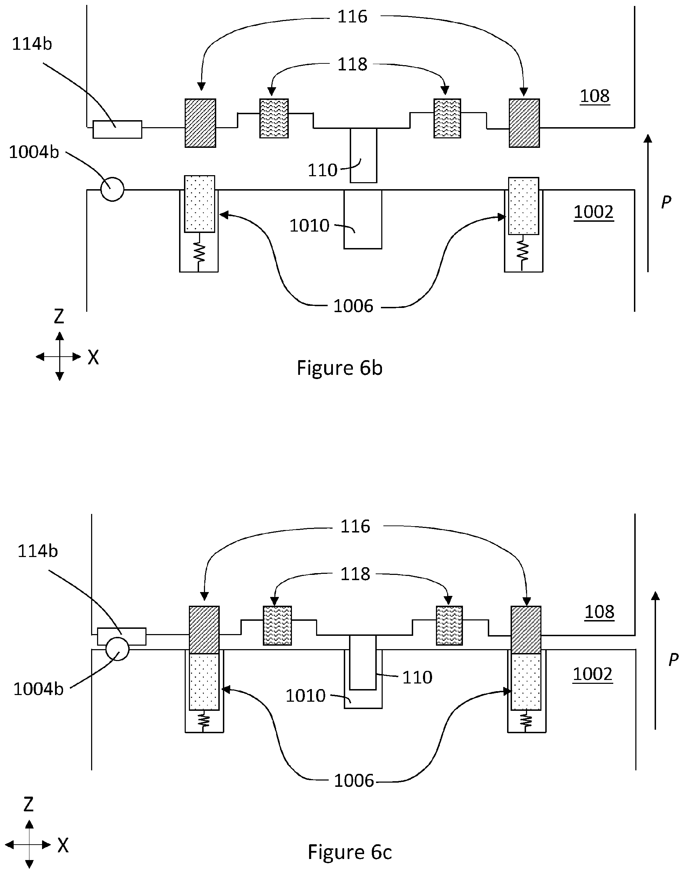

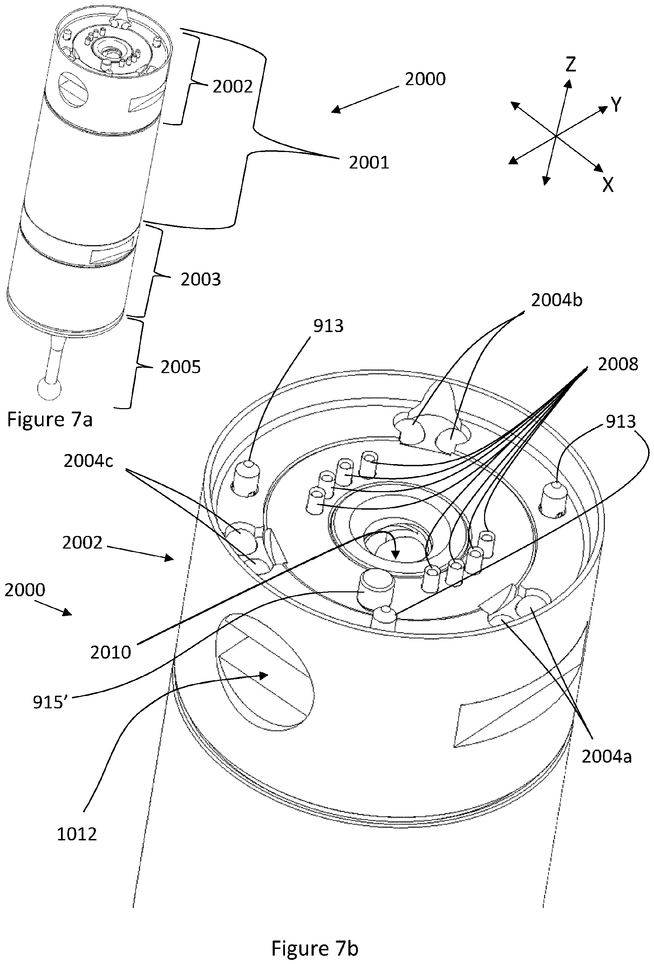

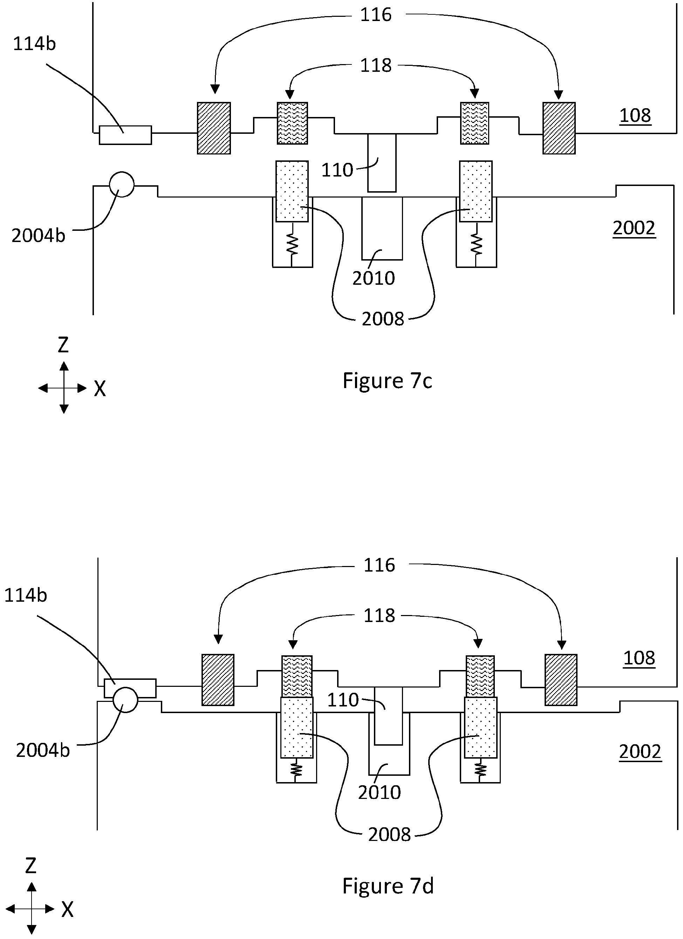

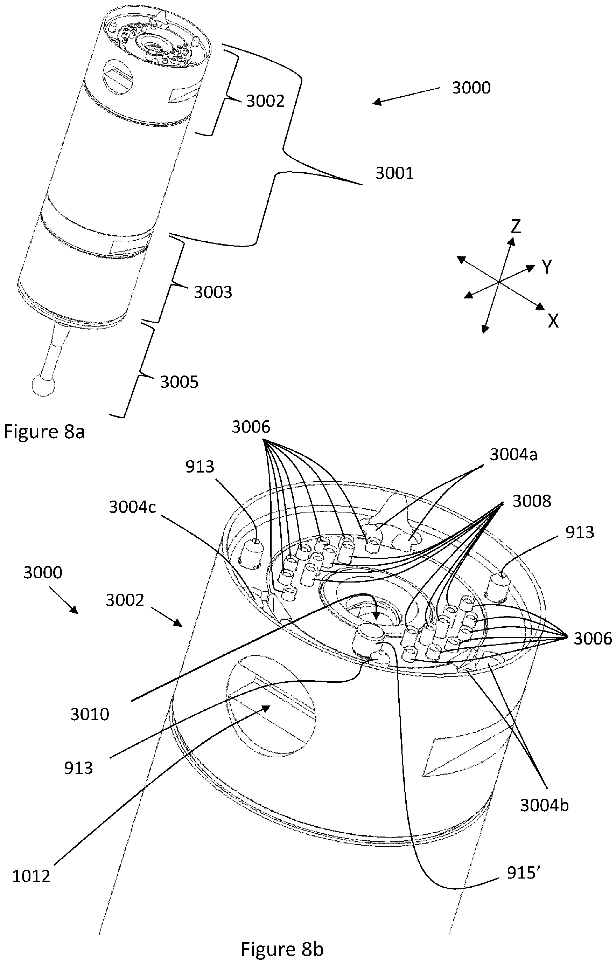

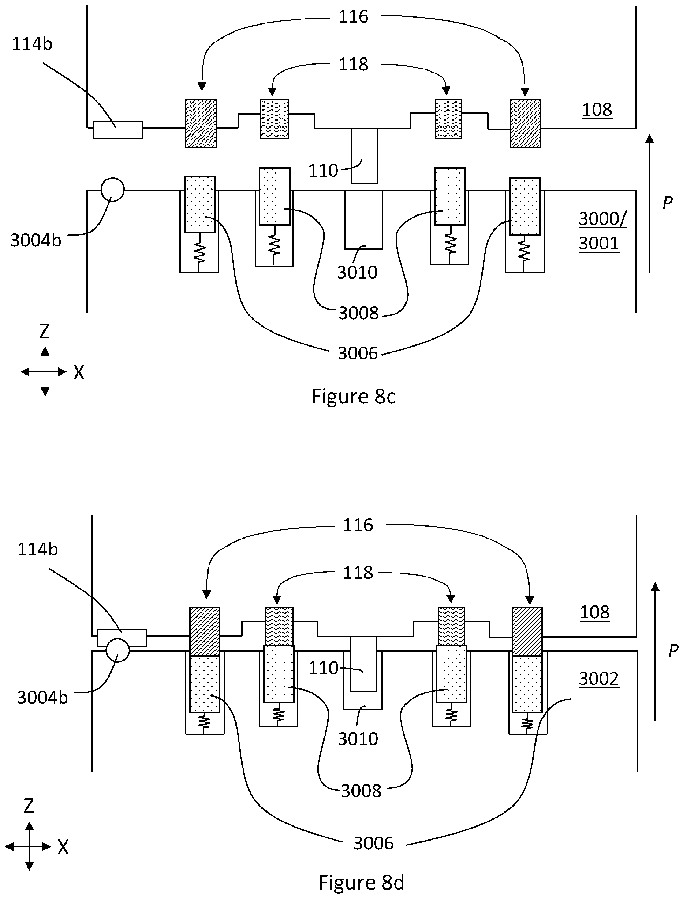

By way of the above configuration, and as explained in more detail below in connection with Figure 6, an end user is able to mount an existing/known/prior art measurement probe 1000 to the articulated head unit 100 of the present invention and connect it to the controller 220 via the D-sub connector 120 (in this embodiment, a high density D-sub connector), using the same type of cable technology via which they would have connected to an existing PH10 articulated head unit 900. Accordingly, as far as the controller 220 is concerned there is no difference to how it communicates with an existing/known/prior art measurement probe 1000, whether it be mounted via the prior art PH10 head unit or the articulated head unit 100 of the present invention. However, as explained in more detail below in connection with Figure 7, an end user is also able to mount a new type of measurement probe 2000 to the articulated head unit 100 of the present invention and connect it to the controller 220 via the RJ45 connector 122, using an Ethernet cable (e.g. a Cat 5, or better, cable). As explained in more detail below in connection with Figure 8, an end user is also able to mount a new type of measurement probe 3000 to the articulated head unit 100 of the present invention and connect it to the controller 220 via both the D-sub connector 120 and also via the RJ45 connector 122, using an Ethernet cable (e.g. a Cat 5, or better, cable).

As schematically illustrated in Figure 5a and 5b, a third wiring set 160 connects the third (socket) electrical connector 124 to one or more components (schematically illustrated by box 150) inside the articulated head unit 100. Such components 150 can include those components, such as motors, which facilitate unlocking/locking and reorientation of the second 104 and third 106 members about their respective axes, D, E. Other components can include one or more processors, one or more sensors, and/or one or more status light sources for indicating head status. Accordingly, such components 150 can be connected to the controller 220 via a cable running between the controller and the third (socket) electrical connector 124. Although not the case in the currently shown embodiment, the articulated head unit 100 could comprise means for connecting the output of a two-wire probe to electrical connections of the third (socket) electrical connector 124. This could be via (like the prior art device illustrated in Figure 9) a suitable adaptor to sit between the two-wire probe and the probe interface 108, and a jumper for bridging electrical contacts on the first (socket) electrical connector 120. Other options comprise including suitable wiring and switches such that two of the thirteen electrical contacts of the first set 116 of electrical contacts can be connected to two of the electrical contacts of the third (socket) electrical connector 124.

Figure 6a illustrates a first example measurement probe 1000 for mounting on the probe interface 108. The first measurement probe 1000 is the same as the prior art measurement probe described above in connection with Figure 9c (and therefore shares the same reference numerals, and the description of this probe shall not be repeated here in its entirety). Indeed, the first measurement probe 1000 schematically depicts the modular SP25 measurement probe 1000 available from Renishaw plc.

The first measurement probe's 1000 electromechanical interface 1002 comprises a set of mechanical/position constraining features 1004a, 1004b, 1004c (in particular, pairs of spherical balls) that are configured to mate with the position constraining features 114a, 114b, 114c on the articulated head unit's 100 probe interface 108. Together, the articulated head unit's 100 set of position constraining features 114a, 114b, 114c and the measurement probe's 1000 set of position constraining features 1004a, 1004b, 1004c define a highly repeatable, non-over-constrained, kinematic mount.

The first measurement probe's 1000 electromechanical interface 1002 also comprises a set of electrical contacts 1006 (in this case thirteen individual electrical contacts) which are configured to electrically connect to the first set 116 of electrical contacts on the articulated head unit's 100 probe interface 108, when the first measurement probe's 1000 and articulated head unit's 100 corresponding/counterpart position constraining features 114, 1004 are engaged. Such electrical contacts 1006, 116 enable the powering of the first measurement probe 1000 (e.g. probe body 1001) as well as communication therewith (e.g. the sending of signals, such as position signals, between the first measurement probe 1000/probe body 1001 and the controller 220). As shown in Figure 6a, the electrical contacts of the set of electrical contacts 1006 are laterally distributed (in the X-Y space) (and in particular are laterally distributed so as to all lie on a notional circular line having the same radius R as the first set of electrical contacts 116 of the probe interface 108) and all have the same longitudinal/axial configuration (in the Z direction).

As illustrated in Figure 6b and 6c, the second set 118 of electrical contacts on the articulated head unit's probe interface 108 are sufficiently recessed such that they do not contact the first measurement probe's 1000 electromechanical interface 1002 when the first measurement probe's 1000 electromechanical interface 1002 is mounted on the probe interface 108. As such, electrical issues (e.g. such as electrical shorting) and/or mechanical issues (e.g. such as them interfering with the proper seating of the first measurement probe 1000/probe body 1001 on the probe interface 108) are avoided.

As schematically depicted in Figures 6b and 6c, the first 116 and second 118 set of electrical contacts on the probe interface 108 are rigidly mounted therein, whereas the electrical contacts of the set of electrical contacts 1006 on the first measurement probe's 1000 electromechanical interface 1002 are axially spring-loaded. As shown, when the first measurement probe's 1000 electromechanical interface 1002 is mounted on the probe interface 108 via the corresponding/counterpart sets of position constraining features 114, 1004, the electrical contacts of the first set 116 (on the probe interface 108) engage with and axially displace the electrical contacts 1006 of the first measurement probe's 1000 electromechanical interface 1002 against their spring, such that the electrical contacts 1006 of the first measurement probe's 1000 electromechanical interface 1002 are actively biased/urged into the electrical contacts of the first set 116 (on the probe interface 108). As also shown, the protruding peg 110 on the head unit's probe interface 108 is received within the socket 1010 on the first measurement probe's 1000 electromechanical interface 1002. The protruding peg 110 is shaped such that a rotatable cam member (not shown) within the socket 1010 can be rotated so as to engage and pull on the protruding peg 110 (which in turn causes the first measurement probe 1000 and head unit 100/probe interface 108 to be pulled into engagement along the predetermined engagement direction P). The cam member can be rotated by turning a rotatable cylinder 1012 accessible on the side of the first measurement probe 1000/probe body 1001. As will be understood, other retaining means/mechanisms could be used to hold the first measurement probe's 1000 electromechanical interface 1002 on the articulated head's probe interface 108, such as magnetic retaining means. The rotatable cylinder 1012 is held axially in place via a pin 915. As shown, the pin 915 is protruding and therefore an oversized hole 109 in provided in a corresponding location on the probe interface 902 such that it does not interfere with the coupling between the probe interface 902 and the measurement probe 1000 mounted thereon.

Figures 7a and 7b illustrate a second example measurement probe 2000 for mounting on the probe interface 108. The second measurement probe 2000 is similar to that of Figure 6, in that it is a modular probe having a probe body 2001 having an electromechanical interface 2002, a probe module 2003 and a stylus module 2005 (having the same functions as the corresponding probe body 1001, probe module 1003 and stylus module 1005 of the measurement probe of Figure 6).

As illustrated in Figure 7b, the second measurement probe's 2000 electromechanical interface 2002 comprises a set of position constraining features 2004a, 2004b, 2004c (in particular, pairs of spherical balls) that are configured to mate with the position constraining features 114a, 114b, 114c on the articulated head unit's 100 probe interface 108. Together, the articulated head unit's 100 set of position constraining features 114a, 114b, 114c and the second measurement probe's set of position constraining features 2004a, 2004b, 2004c define a highly repeatable, non-over-constrained, kinematic mount.

The second measurement probe's 2000 electromechanical interface 2002 also comprises a set 2008 of electrical contacts. In particular, the set 2008 of electrical contacts comprises eight individual electrical contacts which are configured so at to electrically connect to the eight individual electrical contacts of the probe interface's 108 second set 118 of electrical contacts, when the measurement probe's and head unit's corresponding/counterpart position constraining features are engaged. Such electrical contacts enable the powering of the second measurement probe (e.g. probe body 1001) and/or communication therewith (e.g. the sending of signals, such as position signals, between the second measurement probe 2000/probe body 2001 and the controller 220).

As shown in Figure 7a and 7b, the electrical contacts of the set of electrical contacts 2008 are laterally distributed (in the X-Y space) (and in particular are laterally distributed so as to all lie on a notional circular line having the same radius r as the second set 118 of electrical contacts of the probe interface 108) and all have the same longitudinal/axial configuration (in the Z direction).

As schematically depicted in Figures 7b and 7c, the electrical contacts of the set of electrical contacts 2008 of the second measurement probe's 2000 electromechanical interface 2002 are axially spring-loaded. Accordingly, as shown, when the second measurement probe 2000/probe body 2001 is mounted on the articulated head unit's 100 probe interface 108 via the corresponding sets of position constraining features 114, 2004, the electrical contacts of the second set 118 (on the probe interface 108) engage with and axially displace the electrical contacts 2008 of the second measurement probe's 2000 electromechanical interface 2002 against their spring, such that the electrical contacts 2008 of the second measurement probe's 2000 electromechanical interface 2002 are actively biased/urged into the electrical contacts of the second set 118 (on the probe interface 108). As also shown, the protruding peg 110 on the head unit's probe interface 108 is received within the socket 2010 on the second measurement probe's 2000 electromechanical interface 2002, and a rotatable cam member (not shown) within the socket 2010 can be rotated so as to engage and pull on the protruding peg 110 (which is turn causes the second measurement probe 2000/its electromechanical interface 2002 and the articulated head unit 100/its probe interface 108 to be pulled into engagement along the predetermined engagement direction P). The cam member can be rotated by turning a rotatable cylinder 1012 accessible on the side of the second measurement probe's 2000 electromechanical interface 2002. As will be understood, other retaining means/mechanisms could be used to hold the second measurement probe 2000/its electromechanical interface 2002 on the articulated head unit's 100 probe interface 108, such as magnetic retaining means. The rotatable cylinder 1012 is held axially in place via a pin 915'. As shown, the pin 915' is slightly larger in diameter than the pin 915 of the first measurement probe 1000, and in particular has a larger diameter than the hole 909 on the prior known PH10 articulated head, so as thereby prevent the second measurement probe 2000 being accidentally mounted on the prior known PH10 articulated head (because their electrical contact configuration are incompatible). Accordingly, as will be understood, the corresponding hole 109 is sufficiently oversized for receiving the pin 915' of the second measurement probe 2000 (as well as the pin 915 of the first measurement probe 1000).

As illustrated in Figure 7c and 7d, the face of the second measurement probe's 2000 electromechanical interface 2002 which faces the articulated head unit's 100 probe interface 108 when mounted thereon is shaped/sized such that the first set 116 of electrical contacts on the probe interface 108 do not contact the measurement probe's 2000 electromechanical interface 2002 when the second measurement probe's 2000 electromechanical interface 2002 is mounted on the probe interface 108. As such, electrical issues (e.g. such as electrical shorting) and/or mechanical issues (e.g. such as them interfering with the proper seating of the second measurement probe's 2000 electromechanical interface 2002 on the probe interface 108) are avoided.

As described above in connection with Figure 5, the second wiring set 140 (to which the second set of electrical contacts 118 of the probe interface 108 is connected), is configured to be compatible with the 10 Gigabit Ethernet standard. Accordingly, the second measurement probe 2000 of Figure 7 can be configured to communicate with the controller 220 via Ethernet at speeds of operation of 10 gigabits per second.

Figures 8a and 8b illustrate a third example measurement probe 3000 for mounting on the probe interface 108. The third measurement probe 3000 is similar to that of Figures 6 and 7, in that it is a modular probe having a probe body 3001 having an electromechanical interface 3002, a probe module 3003 and a stylus module 3005 (having the same functions as the corresponding probe body 1001, probe module 1003 and stylus module 1005 of the measurement probe of Figures 6 and 7).

As illustrated in Figure 8b, the third measurement probe's 3000 electromechanical interface 3002 comprises a set of position constraining features 3004a, 3004b, 3004c (in particular, pairs of spherical balls) that are configured to mate with the position constraining features 114a, 114b, 114c on the articulated head unit's 100 probe interface 108. Together, the probe interface's 108 set of position constraining features 114a, 114b, 114c and the third measurement probe's set of position constraining features 3004a, 3004b, 3004c define a highly repeatable, non-over-constrained, kinematic mount.

The third measurement probe's 3000 electromechanical interface 3002 differs from that of the first 1000 and second 2000 measurement probes of Figures 6 and 7, in that the third measurement probe's 3000 electromechanical interface 3002 comprises first 3006 and second 3008 sets of electrical contacts. The first set 3006 of electrical contacts is substantially the same as the set 1006 of electrical contacts of the first measurement probe's 1001 electromechanical interface 1002, in that the first set 3006 of electrical contacts comprises thirteen individual electrical contacts which are configured to connect to the thirteen individual electrical contacts of the probe interface's 108 first set of electrical contacts 116. The second set 3008 of electrical contacts are substantially the same as the set 2008 of electrical contacts of the second measurement probe's 2001 electromechanical interface 2002, in that the second set 3008 of electrical contacts comprises eight individual electrical contacts which are configured to connect to the eight individual electrical contacts of the probe interface's 108 second set of electrical contacts 118. Accordingly, as shown in Figures 8a and 8b, the electrical contacts of the first set 3006 of electrical contacts are laterally distributed (in the X-Y space) and all have the same longitudinal/axial configuration (in the Z direction) as each other, and the electrical contacts of the second set 3008 of electrical contacts are laterally distributed (in the X-Y space) and all have the same longitudinal/axial configuration (in the Z direction) as each other, but the first set 3006 of electrical contacts are longitudinally/axially set back from the second set 3008 of electrical contacts.

As described above in connection with Figure 5, the second wiring set 140 (to which the second set of electrical contacts 118 of the probe interface 108 is connected), can be configured to be compatible with the 10 Gigabit Ethernet standard. Accordingly, the third measurement probe 3000 of Figure 8 can be configured to communicate with the controller 220 via Ethernet at speeds of operation of 10 gigabits per second, via the second sets 118, 3008 of electrical contacts and the head unit's second wiring set 140. An advantage of the embodiment of Figure 8 over the embodiment of Figure 7 is that one or more of the electrical contacts of the first sets 116, 3006 of electrical contacts can be used as an additional/alternative means of communication with the measurement probe 3000, and/or as an additional/alternative means for powering the measurement probe 3000 (e.g. instead of or in addition to powering the measurement probe via the second sets 118, 3008 of electrical contacts, and/or instead of or in addition to powering the measurement probe via other means, such as via a battery).

As schematically depicted in Figures 8c and 8d, the electrical contacts in the first 3006 and second 3008 sets of electrical contacts 2008 on the third measurement probe's 3000 electromechanical interface 3002 are axially spring-loaded. As shown in Figure 8d, when the third measurement probe's 3000 electromechanical interface 3002 is mounted on the probe interface 108 via the corresponding/counterpart sets of position constraining features 114, 3004, the electrical contacts of the first set 116 (on the probe interface 108) engage with and axially displace the electrical contacts of the first set 3006 of electrical contacts of the third measurement probe's 3000 electromechanical interface 3002 against their spring, such that they are actively biased/urged into the electrical contacts of the first set 116 (on the probe interface 108). Furthermore, as shown in Figure 8d, when the third measurement probe 3000/probe body 3001 is mounted on the probe interface 108 via the electromechanical interface's 3002 corresponding/counterpart sets of position constraining features 114, 3004, the electrical contacts of the second set 118 (on the probe interface 108) engage with and axially displace the electrical contacts of the second set 3008 of electrical contacts of the electromechanical interface 3002 against their spring, such that they are actively biased/urged into the electrical contacts of the second set 118 (on the probe interface 108).

As also shown, the protruding peg 110 on the head unit's probe interface 108 is received within the socket 3010 on the measurement probe's 3000 electromechanical interface 3002, and a rotatable cam member (not shown) within the socket 3010 can be rotated so as to engage and pull on the protruding peg 110 (which is turn causes the measurement probe 3000 and head unit 100/probe interface 108 to be pulled into engagement along the predetermined engagement direction P). The cam member can be rotated by turning a rotatable cylinder 1012 accessible on the side of the measurement probe 3000/probe body 3001. As will be understood, other retaining means/mechanisms could be used to hold the measurement probe 3000/probe body 3001 on the probe interface 108, such as magnetic retaining means. The rotatable cylinder 1012 is held axially in place via a pin 915' (which is the same size as that of the second measurement probe 2000, described above).

In the embodiments described above, the first set of electrical contacts 1006, 3006 of electrical contacts of the electromechanical interfaces 1002, 3002 of the embodiments of Figures 6 and 8 have the same number of pins (i.e. 13 pins) as the counterpart first set 116 of electrical contacts of the articulated head unit's 100 probe interface 108. Similarly, the second set of electrical contacts 2008, 3008 of electrical contacts of the electromechanical interfaces 2002, 3002 of the embodiments of Figures 7 and 8 have the same number of pins (i.e. 8 pins) as the counterpart second set 118 of electrical contacts of the articulated head unit's 100 probe interface 108. However, this doesn't need to be the case. For instance, the electromechanical interfaces of the probes 1000, 2000, 3000 could be configured such that the first and/or second sets of electrical contacts have fewer electrical contacts than their counterpart set of electrical contacts on the articulated head unit's probe interface 108. For instance, this could be the case if the probe does not need to make use of all of the electrical contacts available on the articulated head unit's probe interface 108. It might also be the case that the first and/or second sets of electrical contacts have more electrical contacts than their counterpart set of electrical contacts on the articulated head unit's probe interface 108, but of course in that case the surplus connectors wouldn't be able to connect to anything on the probe interface 108.

In the embodiments described above, there are completely separate/independent wiring sets for the first 116 and second 118 sets of electrical contacts, and therefore they do not share any electrical conductors (for relaying signals/power to and/or from their respective connectors 120, 122 on the back of the articulated head unit 100). Whilst this can be preferable, especially for example when wanting to meet different and/or minimum standards for one or both of the first and second sets of electrical contacts, this need not necessarily be the case, and common electrical conductors could be shared by the first 116 and second 118 sets of electrical contacts.

Similarly, in the embodiments described above, there are separate respective connectors 120, 122 on the back of the articulated head unit 100 for the first 116 and second 118 sets of electrical connectors, but this need not necessarily be the case. For instance, the first 116 and second 118 sets of electrical contacts could be connected to one connector, e.g. one D-sub miniature connector provided on the articulated head unit 100. This can be the case regardless of whether or not there are completely separate/independent wiring sets for the first and second sets of the electrical contacts.

In the embodiments described above, the connectors 120, 122, 124 of the articulated head (for connecting the articulated head unit to a controller) are provided on the back (in particular, on the same back face) of the articulated head unit 100, but this need not necessarily be the case, e.g. one or more of the connectors could be provided on the side of the articulated head unit. Typically, and preferably, the connectors 120, 122, 124 are on the part of the articulated head unit 100 that is for mounting to the positioning apparatus 200 (e.g. first member 102). (Typically, the connectors 120, 122, 124 will be provided at/towards an end of the articulated head unit that is distal to the probe interface 108).

In the embodiments described above, with regard to the articulated head unit's 100 electromechanical interface 108, the second set 118 of electrical contacts are (longitudinally/axially) set back from the first set 116 of electrical contacts, but this need not necessarily be the case. For instance, the first set 116 of electrical contacts could be set back from the second set 118 of electrical contacts. Accordingly, with regard to the electromechanical probe interface 3002 of the probe 3000 of the embodiment of Figure 8, its first set 3006 of electrical contacts are (longitudinally/axially) set back from its second set 3008 of electrical contacts, but this need not necessarily be the case and it could be the other way around.

Although it is preferable that one of the sets of electrical contacts is set back compared to the other set, this doesn't have to be the case. For instance, the first and second sets of electrical contacts could have the same longitudinal (or "axial" arrangement/position as each other, e.g. their free ends could all terminate at the same longitudinal (e.g. axial) arrangement/position.

In the embodiments described above, the electromechanical interface 1002, 2002, 3002 is manufactured as a separate component to the rest of their respective probe body 1001, 2001, 3001. This is also the case for the probe interface 108 of the articulated head unit 100. Accordingly, the electromechanical interface can be manufactured and supplied separately to its respective probe body/articulated head unit. In the embodiments above, the electromechanical interface is configured to be affixed to the rest of its respective probe body/articulated head unit during an assembly process. Of course in other embodiments this doesn't have to be the case; for instance one or more of the electromechanical interfaces 1002, 2002, 3002 of the probes 1000, 2000, 3000 and/or the electromechanical interface 108 of the articulated head unit 100 could be made as an integral part of the rest of the probe body/articulated head unit.

In the embodiment described, the articulated head unit 100 is what is commonly referred to in the field of CMMs as an "indexed" articulated head. As will be understood, an indexed articulated comprises indexing mechanisms which enable the relatively rotatable parts of the articulated head unit to be locked into a defined, indexed position. Indexing mechanisms can be provided by providing two sets of intermeshing members, one on each of the relatively rotatable members. When the intermeshing members are engaged, they lock so as to present relative rotation of the rotatable members. When the intermeshing members are disengaged, the rotatable members are free to rotate relative to each other such that they (and a measurement probe mounted thereon) can be repositioned to a new orientation before being reengaged so as to lock the rotatable members (and a measurement probe mounted thereon) at the new orientation. A measurement operation can then take place with the measurement probe being held at a defined, known, rotational orientation. Details of an example indexed articulated are described in International Patent Application PCT/GB2022/050419 (International Publication Number: WO2022/175658). Another example of an indexed articulated head is the PH10 articulated head available from Renishaw plc (relevant details of which are described above in connection with Figure 9).

As will be understood, the articulated head unit 100 need not necessarily be an indexed articulated head, and for instance could instead be a so-called "active", "servoing" or "continuous" articulated head (hereinafter referred to as a "continuous" articulated head). As will be understood, in contrast to an indexing articulated head which has discrete indexed position, a continuous articulated head enables orientation of a measurement probe on it to substantially any angle about at least one axis, and are often described as providing a near infinite number of angular orientations. It can also be the case with a continuous articulated head that the orientation of the measurement probe mounted about an axis of rotation can be changed during measurement (e.g. whilst a contact probe is in contact with an object being inspected and acquiring measurement information). Details of an example continuous head are described in European Patent EP0402440 and European Patent EP 1989504. Another example of a continuous articulated head is the REVO-2 articulated head available from Renishaw plc.

In the embodiments described above, the head unit is an articulated head unit. However, as will be understood, whilst this can be beneficial for facilitating the reorientation of a device mounted thereon about one or more axes of rotation, this need not necessarily be the case, and for example the head unit could be a "fixed" head unit in that it does not have any articulated members/axes of rotation.

In the embodiments described above, the electromechanical probe interface 108 and the electromechanical interface of the measurement probes 1000, 2000, 3000, comprise corresponding orientation features configured such that the measurement probes 1000, 2000, 3000 can be mounted on the electromechanical probe interface 108 in one rotational orientation only. In particular, the electromechanical probe interface 108 comprises three holes 107 and the measurement probes 1000, 2000, 3000 comprise three correspondingly arranged pins 913 such that the pins can be received in the holes 107. The holes 107 and pins 913 are not symmetrically arranged, and as such are arranged and configured such that the corresponding position constraining features 904, 1004 of the electromechanical probe interface 108 and the counterpart electromechanical interfaces of the measurement probes 1000, 2000, 3000 can only be engaged with each other when they are rotationally oriented such that the holes 107 and pins 913 are all aligned (which can only be true at one particular rotational orientation).

In the embodiments described above, the measurement probes 1000, 2000, 3000 are modular probes. However, this need not necessarily be the case, and for instance, all parts of the measurement probe (e.g. including the stylus, stylus deflection sensing mechanism and mount for mounting the probe on the probe interface 108) could be provided as a single indivisible unit.

In the embodiments described above, the electromechanical interfaces of the probes are often labelled as the "counterpart" electromechanical interface, and as such, the articulated head unit's electromechanical interface could be labelled as a "primary" electromechanical interface, but as will be understood this need not necessarily be the case, and they could be labelled the other way around.

In the embodiments described above, the measurement probe is a contact probe. Examples of suitable contact probes include touch trigger probes, analogue/scanning probes, surface finish probes, surface roughness probes. However, it need not necessarily be the case that the probe is a contact probe. For instance, a non-contact measurement probe could be provided for mounting on the probe interface. Such non-contact measurement probes can include optical non-contact probes, for instance a camera-probe. Also, other types of device could be mounted on the electromechanical interface 108, for instance a temperature sensing device and/or an ultrasound inspection device.

## Claims

1. A head unit via which a device can be mounted onto a positioning apparatus, the head unit comprising:
• a first mount provided at a first end of the head unit, for mounting a device thereon;
• a second mount provided at a second end of the head unit, for mounting the head unit on a positioning apparatus;
• a first set of electrical contacts for electrically connecting to a device mounted on the first mount, the signals from which are passed through to a first plug or socket electrical connector on the head unit, the first plug or socket electrical connector comprising a set of electrical contacts and a mechanical interface for fitting with a counterpart plug or socket electrical connector on the positioning apparatus; and
• a second set electrical contacts, different to and separate from the first set of electrical contacts, for electrically connecting to a device mounted on the first mount, the signals from which are passed through to a second plug or socket electrical connector on the head unit which is different to and separate from the first plug or socket electrical connector on the head unit, the second plug or socket electrical connector comprising a set of electrical contacts and a mechanical interface for fitting with a counterpart plug or socket electrical connector on the positioning apparatus.

2. A head unit as claimed in claim 1, in which the first and second sets of electrical contacts for electrically connecting to a device mounted on the first mounting face are provided at or proximal the first end of the head unit.

3. A head unit as claimed in claim 1 or 2, in which the first and second plug or socket electrical connectors are provided at or proximal the second end of the head unit.

4. A head unit as claimed in any preceding claim, wherein the first mount comprises a plurality of mounting features configured to engage with counterpart mounting features on a device, and wherein said plurality of mounting features and the first and second sets of electrical contacts are provided on a common face at the first end of the head unit.

5. A head unit as claimed in any preceding claim, in which the first mount and the first and second sets of electrical contacts of the head unit are configured to engage with a counterpart mount and electrical contacts on a device by bringing the head unit and device together along a predetermined engagement direction, and wherein the device-contacting ends of the first set of electrical contacts lie at a first position along the predetermined engagement direction and the device-contacting ends of the second set of electrical contacts lie at a second position along the predetermined engagement direction.

6. A head unit as claimed in any preceding claim, in which the electrical contacts of the first set of electrical contacts are arranged in a circular configuration having a first radius.

7. A head unit as claimed in any preceding claim, in which the electrical contacts of the second set of electrical contacts are arranged in a circular configuration having a second radius.

8. A head unit as claimed in claim 6 and 7, in which the first radius is different to the second radius.

9. A head unit as claimed in claims 6 to 8, in which the first set of electrical contacts and the second set of electrical contacts are arranged concentrically with respect to each other.

10. A head unit as claimed in any preceding claim, comprising:
a first wiring set which terminates at a first end thereof at the first set of electrical contacts, and which terminates at a second end thereof at the first plug or socket electrical connector; and
a second wiring set, which is independent of the first wiring set, and which terminates at a first end thereof at the second set of electrical contacts, and which terminates at a second end thereof at the second plug or socket electrical connector.

11. A head unit as claimed in any preceding claim, in which the second wiring set is configured such that there is a nominal characteristic impedance maintained along the entire length of the second wiring set, said nominal characteristic impedance being not less than 80 Ohms and not more than 120 Ohms.

12. A head unit as claimed in any preceding claim, comprising a first articulated joint configured such that the angular orientation of the first mount relative to the second mount can be adjusted about a first axis.

13. A head unit as claimed in claim 12, comprising a second articulated joint such that the angular orientation of the first mount relative to the second mount can be adjusted about a second axis that is orthogonal to the first axis.

14. A head unit as claimed in any preceding claim, in which the first wiring set comprises one or more Flat Flexible Cables (FFC) and the second wiring set comprises one or more Flat Flexible Cables (FFC), wherein at least one of the Flat Flexible Cables (FFC) of the first wiring set and at least one of the Flat Flexible Cables (FFC) of the second wiring set overlay each other within the head unit.
